Europäisches Patentamt

European Patent Office

Office européen des brevets

(19)

(11) Veröffentlichungsnummer: **0 264 899 B1**

(12) **EUROPÄISCHE PATENTSCHRIFT**

(45) Veröffentlichungstag der Patentschrift: **15.05.91**

(51) Int. Cl.⁵: **B30B 9/24**, B01D 33/04

(21) Anmeldenummer: **87115320.1**

(22) Anmeldetag: **20.10.87**

(54) **Vorrichtung zum Entwässern von Schlamm und ähnlichen Substanzen.**

(30) Priorität: **21.10.86 DE 3635766**
**12.10.87 DE 3734474**
**15.10.87 DE 3734974**

(43) Veröffentlichungstag der Anmeldung:
**27.04.88 Patentblatt 88/17**

(45) Bekanntmachung des Hinweises auf die Patenterteilung:
**15.05.91 Patentblatt 91/20**

(84) Benannte Vertragsstaaten:
**AT CH ES FR GB IT LI NL SE**

(56) Entgegenhaltungen:
**EP-A- 0 023 899**     **EP-A- 0 053 250**
**DE-C- 288 521**      **FR-A- 2 342 091**
**GB-A- 1 032 970**     **US-A- 3 230 866**
**US-A- 4 383 918**     **US-A- 4 402 834**

(73) Patentinhaber: **Bähr, Albert**
**Am Hungerberg 10**
**W-6682 Ottweiler 2(DE)**

(72) Erfinder: **Bähr, Albert**
**Am Hungerberg 10**
**W-6682 Ottweiler 2(DE)**

(74) Vertreter: **Brose, D. Karl**
**PATENTANWÄLTE BROSE & BROSE Wiener**
**Strasse 2**
**W-8023 München-Pullach(DE)**

## Beschreibung

Die Erfindung betrifft eine Vorrichtung zum Entwässern von Schlamm und ähnlichen Substanzen, insbesondere von Abfall- und Produktionsschlämmen, wobei der zu entwässernde Schlamm kontinuierlich der Vorrichtung zugeführt und anschließend in ein sich intermittierend vorbei an stationären Druckplatten bewegendes, geschlossenes Schlammkammervolumen eingespeist wird, mit einer Puffereinrichtung zwischen der kontinuierlichen Schlammzuführung und der diskontinuierlichen, intermittierenden Schlammeinspeisung.

Eine solche Vorrichtung ist aus dem europäischen Patent 0 063 991 bekannt. Bei der dort gezeigten Siebbandpresse wird der zu entwässernde Schlamm kontinuierlich auf ein in etwa waagrecht angeordnetes Siebband aufgegeben. Anschließend wird das obere Siebband dem unteren Siebband zugeführt und die beiden Siebbänder werden in geschlossenem Zustand unter Einschließung des zu entwässernden Schlamms serpentinenartig durch eine Vielzahl von sich gegenüberliegenden Druckplatten geführt. Zum Entwässern des Schlamms zwischen den Druckplatten werden die Siebbänder stillgesetzt. Als Puffereinrichtung zwischen der kontinuierlichen Schlammzuführung und der diskontinuierlichen intermittierenden Schlammeinspeisung ist hier vorgesehen, daß über bewegliche Walzenanordnungen während des Stillstands der Siebbänder das von den Siebbändern definierte geschlossene Schlammkammervolumen vergrößert wird, indem entsprechende Umlenkwalzen zur Verlängerung des Schlammkammervolumens translatorisch bewegt werden.

Die bekannte Vorrichtung ist zwar insoweit bereits vorteilhaft, als trotz der intermittierenden Bewegung der Siebbänder der zu entwässernde Schlamm kontinuierlich der Vorrichtung zugeführt werden kann. Andererseits erfordert jedoch die dort vorgesehene Puffereinrichtung sowohl in konstruktiver als auch in steuerungstechnischer Hinsicht einen relativ großen Aufwand.

Demgegenüber liegt der vorliegenden Erfindung die Aufgabe zugrunde, die bekannte Vorrichtung insbesondere hinsichtlich der Puffereinrichtung zu vereinfachen und gleichzeitig eine wirksamere Entwässerung zu ermöglichen.

Diese Aufgabe wird erfindungsgemäß im wesentlichen dadurch gelöst, daß die Puffereinrichtung von einem als Vorentwässerungsstufe ausgebildeten ortfesten Behälter gebildet wird, dem der zu entwässernde Schlamm kontinuierlich zugeführt wird und dessen unteres Ende mit dem Schlammkammervolumen in Verbindung steht.

Diese Maßnahmen ergeben zwei erhebliche Vorteile gegenüber dem bekannten Stand der Technik: Zunächst sind bei der vorliegenden Erfindung zur Realisierung der Puffereinrichtung prinzipiell keinerlei mechanisch bewegbaren Teile erforderlich. Bei stillstehendem Schlammkammervolumen und kontinuierlicher Zuführung von Schlamm in den Entwässerungskorb steigt der Schlammspiegel innerhalb des Entwässerungskorbs kontinuierlich an. Sobald das Schlammkammervolumen wieder vorwärts bewegt wird, sinkt der Schlammspiegel im Entwässerungskorb entsprechend ab. Durch geeignete Dimensionierung des Entwässerungskorbs ist ein sehr großes Pufferevolumen realisierbar.

Der weitere wesentliche Vorteil der erfindungsgemäßen Lösung besteht darin, daß der als Puffervolumen dienende Entwässerungskorb gleichzeitig als äußerst effiziente Vorentwässerungsstufe dient, wobei der während des Bandstillstands ansteigende Schlammspiegel gleichzeitig für eine Erhöhung des hydrostatischen Drucks innerhalb des Entwässerungskorbs sorgt, so daß die Perioden des Bandstillstands bezüglich der Schlammentwässerung keine verlorene Totzeit darstellen, sondern vielmehr für ein erheblich verstärktes Vorentwässern innerhalb der Vorentwässerungsstufe sorgen.

Gemäß einem besonders vorteilhaften Merkmal der Erfindung ist weiterhin vorgesehen, daß der Filterkorb direkt oberhalb eines im Bereich der Schlammeinspeisung im wesentlichen waagrecht geführten Filterbandes, welches eine Seite des Schlammkammervolumens begrenzt, angeordnet ist. Bei einer solchen Anordnung kann der gesamte hydrostatische Druck der Schlammsäule des Entwässerungskorbs direkt an diesem Filterband zur Wirkung kommen, wodurch die Vorentwässerung des Schlamms nochmals deutlich gesteigert wird.

Vorzugsweise ist weiterhin vorgesehen, daß die Vorentwässerungsstufe folgendes enthält: Einen Misch- und Reaktionsraum mit einem Eingang für Schlamm und Flokkungsmittel zum kontinuierlichen Zuführen von Schlamm und Flockungsmittel in den Misch- und Reaktionsraum, eine Vorrichtung zum kontinuierlichen Zuführen von Schlamm aus dem Misch- und Reaktionsraum in den Entwässerungskorb,

den Entwässerungskorb mit mindestens einem vorzugsweise zylinderischen Siebkorb mit vertikaler Zylinderachse zum hydrostatischen Entwässern des Schlamms, wobei innerhalb des Entwässerungskorbs das Filtrat den mindestens einen Siebkorb in radialer Richtung durchströmt, sowie eine Vorrichtung zum Auffangen und Abführen des Filtrats. Die Vorentwässerungsstufe wird somit im wesentlichen durch eine Kombination eines Mischers für Schlamm und Flockungsmittel mit nachgeschaltetem Entwässerungskorb und zwischengeschalteter Reaktionsstrecke gebildet.

Gemäß einem besonders vorteilhaften Merkmal der Erfindung ist der Misch- und Reaktionsraum als vertikal stehender, U-förmiger Rohrkörper ausgebildet, wobei der Eingang für Schlamm und Flokkungsmittel am oberen Endbereich des einen Schenkels des Rohrkörpers angeordnet ist und wobei der obere Endbereich des anderen Schenkkels des Rohrkörpers mit der Vorrichtung zum kontinuierlichen Zuführen von Schlamm in den Entwässerungskorb in Verbindung steht. In diesem Fall bildet der eine Schenkel des U-förmigen Rohrkörpers eine Mischstrecke für Schlamm und Flockungsmittel und der andere, schlammausgangseitige Schenkel des U-förmigen Rohrkörpers die Reaktionsstrecke.

In konstruktiv besonders einfacher Weise wird der Schlamm dadurch vom Misch- und Reaktionsraum zum Entwässerungskorb geführt, daß der obere Endbereich des anderen Schenkels des U-förmigen Rohrkörpers bezüglich des Entwässerungskorbs in einer solchen Höhe angeordnet ist, daß der aus dem oberen Endbereich des anderen Schenkkels austretende Schlamm unter Schwerkraftwirkung dem oberen Ende des Entwässerungskorbes zugeführt wird. Aufwendige Pumpeneinrichtungen und dergleichen erübrigen sich hierbei.

Zum effektiven Vermischen von Schlamm und Flockungsmittel bzw. anderen Reaktionstoffen ist gemäß einem weiteren vorteilhaften Merkmal der Erfindung im Misch-und Reaktionsraum vorzugsweise im Bereich des Eingangs für Schlamm und Flockungsmittel eine Mischeinrichtung insbesondere in Form eines Wirbelrades angeordnet. Andere, dem Fachmann geläufige Mischeinrichtungen können selbstverständlich ebenso verwendet werden. Bei U-förmiger Ausbildung des Misch- und Reaktionsraumes bildet somit der dem Schlammeingang zugeordnete Schenkel die Mischzone und der dem Schlammausgang zugeordnete Schenkel eine Beruhigungszone.

Der Entwässerungskorb kann ein oder zwei Siebkörbe umfassen. Falls ein einziger, aufrechtstehender Siebkorb vorgesehen ist, wird der zu entwässernde Schlamm dem Inneren des Siebkorbs zugeleitet. Das Filtrat fließt dann nach außen ab, wird dort aufgefangen und in geeigneter Weise abgeleitet. Der vorentwässerte Schlamm wird von unterhalb des Siebkorbs zur weiteren Verarbeitung kontinuierlich oder diskontinuierlich abgeführt.

Eine besonders effektive Entwässerung ergibt sich jedoch dann, wenn gemäß einem besonders bevorzugten Merkmal der Erfindung zwei konzentrische Siebkörbe vorgesehen sind und der Schlamm dem zwischen den beiden Siebkörben vorhandenen Ringraum zugeleitet wird. Der Schlamm kann dann sowohl radial nach innen als auch radial nach außen entwässert werden.

Um die Entwässerungswirkung des Entwässerungskorbes zu steigern und ein sukzessives Zusetzen der Öffnungen des Siebkorbes wirksam zu verhindern, ist weiterhin vorzugsweise eine Vorrichtung zum Reinigen des mindestens einen Siebkorbs vorgesehen. Diese Reinigungsvorrichtung wird zweckmäßigerweise von einer rotierenden, eine Wandung des mindestens einen Siebkorbs überstreichenden Abstreifvorrichtung gebildet, welche beispielsweise mit der Sieboberfläche in Kontakt befindliche, vertikale Bürstenleisten umfaßen kann.

Die oben erläuterte, spezielle Ausführungsform der Vorentwässerungsstufe sorgt für ein besonders wirksames Vorentwässern des zu entwässernden Schlamms und steigert somit die Effektivität der gesamten Vorrichtung ganz erheblich.

Gemäß einem weiteren vorteilhaften Merkmal der Erfindung ist zwischen dem unteren Ende des Entwässerungskorbs und dem Schlammkammervolumen eine Einrichtung zum Steuern der Menge des in das Schlammkammervolumen einzuspeisenden, vorentwässerten Schlamms angeordnet. Diese Einrichtung wird vorzugsweise von einer steuerbaren bzw. regelbaren Klappe oder einem steuerbaren bzw. regelbaren Schieber gebildet. Diese Klappe bzw. dieser Schieber regelt die ausgetragene Menge an vorentwässertem Schlamm beispielsweise in Abhängigkeit vom Prozentsatz der Trockensubstanz des Schlamms oder von anderen Betriebsbedingungen.

Ein besonders einfacher Aufbau der gesamten Vorrichtung ergibt sich dann, wenn gemäß einem weiteren Merkmal der Erfindung das Schlemmkammervolumen zwischen Entwässerungskorb und Schlammkuchen-Austragsstation im wesentlichen geradlinig verläuft. Das Schlammkammervolumen ist hier vorzugsweise zwischen einem unteren umlaufenden Filterband und einem oberen umlaufenden Band definiert, wobei das obere umlaufende Band vorzugsweise ein Druckband sein kann.

Gemäß einem weiteren vorteilhaften Merkmal einer Ausführungsform ist vorgesehen, daß die das Schlammkammervolumen definierenden Bänder eine geradlinige, im wesentlichen horizontal verlaufende Hochdruckentwässerungszone durchlaufen, die durch mindestens ein stationäres Druckplattenpaar definiert ist, welches horizontal angeordnete, gegenüberliegende Druckplatten aufweist, zwischen denen die das Schlammkammervolumen definierenden Bänder verlaufen und die zum Erzeugen des Entwässerungsdrucks intermittierend aufeinanderzu bewegbar sind. Vorzugsweise sind eine Mehrzahl von nebeneinanderliegenden Druckplattenpaaren vorgesehen.

Zweckmäßigerweise sind die unteren Druckplatten starr am Gerätegestell gelagert und die oberen Druckplatten sind über hydraulische Hochdruckerzeuger gegen die unteren Druckplatten zustellbar.

Das Öffnen der Druckplatten erfolgt gemäß einem weiteren bevorzugten Merkmal der Erfindung vorzugsweise durch Federkraft. Hierzu werden die Druckplatten eines jeden Druckplattenpaares in Abwesenheit des Druckes der hydraulischen Hochdruckerzeuger mittels Druckfedern auseinander in eine geöffnete Position gedrückt, in der sich die das Schlammkammervolumen definierenden Bänder zwischen den Druckplatten vorwärts bewegen können.

Um bei geöffneten Druckplatten dennoch ein dichtgeschlossenes Schlammkammervolumen sicherzustellen, ist gemäß einem weiteren vorteilhaften Merkmal der Erfindung vorgesehen, daß längs der Hochdruck-Entwässerungszone sich gegenüberliegende Druckrollenpaare zum Führen der das Schlammkammervolumen definierenden Bänder angeordnet sind, wobei die Druckrollen der Druckrollenpaare in Richtung zum Schlammkammervolumen hin federvorgespannt sind. Diese Druckrollenpaare dienen somit einerseits zum reibungsarmen Führen des Schlammkammervolumens und andererseits zum dichtenden Zusammendrücken der das Schlammkammervolumen definierenden Bandanordnung während der Transportphase.

Zum seitlichen Abdichten des Schlammkammerraums im Bereich der Hochdruck-Entwässerungszone ist vorzugsweise je ein um vertikale Achsen umlaufender Dichtungsring vorgesehen, welcher gemeinsam mit der Bandanordnung intermittierend angetrieben ist.

Um größere Durchsatzleistungen möglich zu machen, ist bei einer besonders bevorzugten Ausführungsform vorgesehen,daß die Puffereinrichtung als großvolumige Vorentwässerungskammer ausgebildet ist, deren Boden durch das Filterband gebildet ist.

Da sich durch wirksame Vorentwässerung bereits in dieser Stufe eine Volumenverringerung bis nahezu auf ein Drittel erzielen läßt, wird durch diese Gestaltung ein erheblich verbesserter Durchsatz erzielt, da der an die Vorentwässerung anschließende Teil der Vorrichtung wesentlich geringere Mengen verarbeiten muß. Bei stillstehendem Schlammkammervolumen, d.h. während der Zeit, in welcher intermittierend zwischen den Druckplatten Hochdruck aufgebracht wird, steigt bei kontinuierlicher weiterer Zuführung von Schlamm in die Schlammkammer der Schlammspiegel kontinuierlich an, wodurch gleichzeitig der hydrostatische Druck innerhalb der Schlammkammer erhöht wird, so daß beim Stillstand des Filterbands während des Hochdrucktaktes die Vorentwässerungsleistung sogar noch steigt.

Bei einer bevorzugten Weiterbildung nach der Erfindung sind hierbei in der Vorentwässerungskammer zusätzliche Filterflächen vorgesehen, welche insbesondere als in der Vorentwässerungskammer angeordnete Spaltsiebe ausgebildet sind.

Durch diese Konstruktion läßt sich ohne weiteres eine Volumenverringerung um 50 % erreichen.

Bei einer besonders bevorzugten Ausführungsform nach der Erfindung ist in Förderrichtung an die Vorentwässerungskammer anschließend eine Mitteldruckstufe vorgesehen, in der auf den geförderten Schlamm ein oberes Druckband aufläuft.

Im einzelnen ist es hierbei bevorzugt, daß das Druckband als Mitnehmerband mit daran befestigten Querschotten ausgebildet ist. Hierdurch wird erreicht, daß der Schlamm quasi portionsweise behandelt wird und bei Druckeinwirkung nicht mehr nach vorne oder hinten ausweichen kann.

Im einzelnen kann es vorteilhaft sein, dem Filterband ebenfalls Querschotten zuzuordnen.

In beiden Fällen ist es bevorzugt, daß die Querschotten schwenkbar und/oder flexibel ausgebildet sind.

Bei einzelnen Ausführungsformen kann es vorteilhaft sein, zwei Mitteldruckstufen hintereinander zu schalten.

Besonders bevorzugten ist es, daß in der Mitteldruckstufe das Filterband und das Druckband auf einer Vielzahl von Druckwalzen abgestützt sind. Hierbei kann in vorteilhafter Weise der durch die Druckwalzen ausgeübte Druck verändert werden.

Bei einer besonders bevorzugten Ausführungsform nach der Erfindung sind hierbei die oberen und/oder die unteren Rolle je in einem gemeinsamen Lagerungsrahmen gelagert, der an einem Ende schwenkbar gelagert ist und es sind Druckerzeuger für die Schwenkbewegung des Rahmens vorgesehen. Es ist offensichtlich, daß mittels dieser Anordnung eine echte Mitteldruckstufe geschaffen wird, mittels derer sich im Vergleich zu bekannten Mitteldruckstufen wesentlich höhere Drücke ausüben lassen. Wegen der besonderen Natur der Vorrichtung, welche im Anschluß an die Vorentwässerung diskontinuierlich betrieben wird, ist es nämlich möglich, den Zeitraum, in welchem wegen des Druckhubs der Hochdruckstufe sämtliche, das Schlammkammervolumen definiereden Bändern ohnehin stillstehen, dazu zu nutzen, in der Mitteldruckstufe ebenfalls einen erhöhten Druck auszuüben. Dies kann vorteilhaft dadurch geschehen, indem durch die Druckerzeuger die Druckwalzenpakete, welche in den gemeinsamen Lagerungsrahmen zusammengefaßt sind, aufeinander zu bewegt werden. Ein praktische Begrenzung hinsichtlich der Druckhöhe besteht hierbei kaum, da wegen des Stillstands der Bänder keine Relativbewegung auftritt und somit auch kein erhöhter Verschleiß der Filterbänder zu befürchten ist. Gleichzeitig sorgen die erfindungsgemäß vorgesehenen Querschotten dafür, daß der Schlamm sich nicht bei Steigerung des Drucks entgegen der Förderrichtung zurückbewegen kann.

Im einzelnen ist es hierbei noch bevorzugt, daß zwischen benachbarten Druckwalzen Tragleisten aus einem reibungsarmen Material vorgesehen werden, welche bei einer besonders bevorzugten Ausführungsform derart zwischen den Druckrollen angeordnet sind, daß sie bezüglich der jeweils oberen oder unteren Druckrolle gegenüberliegen. Hierdurch wird beim Druckhub der Mitteldruckstufe in Ebene des Filterbandes bzw. des Druckbandes eine gleichförmigere Abstützung erzielt.

Im einzelnen kann es sich als vorteilhaft erweisen, die Tragleisten abgefedert auszubilden.

Als Druckerzeuger lassen sich für die Mitteldruckstufe bevorzugt Hydraulikzylinder verwenden, welche während des Druckhubs der Hochdruckstufe, d.h. beim Stillstand der Bänder betätigbar sind.

Eine besonders vorteilhafte Weiterbildung der Erfindung besteht in einer Ausgestaltung der Hochdruckstufe, indem hier auf einer unteren stationären Druckplatte eine nach oben offene Filtratkanäle aufweisende Platte vorgesehen ist, auf welcher das Filterband aufliegt.

In vorteilhafter Weise sind hierbei noch zusätzliche Druckrollen vorgesehen, welche durch Öffnungen über die Oberfläche der Platte vorstehen. Die Platte besteht hierbei vorteilhafterweise aus einem reibungsarmen Kunststoff oder Gummi. Durch diese Weiterbildung nach der Erfindung können die mit umlaufenden Tragbänder bekannter Konstruktionen eingespart werden, da sich in der Praxis die Tragbänder insbesondere im Hochdruckbereich als vorteilhaft erwiesen haben. Bei der geschilderten Ausführungsform nach der Erfindung wird praktisch ein Tragbandabschnitt stationär in der Hochdruckstufe angeordnet, was zu erheblichen Einsparungen in der Konstruktion und im Betrieb führt. Dieses Merkmal wird dadurch möglich, daß ja in der Hochdruckzone eine Relativbewegung zwischen der die Filtratkanäle aufweisenden Platte und den Filterbändern nur bei geöffneter Hochdruckstufe erfolgt.

Bei einer abgewandelten Ausführungsform nach der Erfindung ist es selbstverständlich auch möglich, das Filterband auf einem mitlaufenden Tragband abzustützen, welches nach oben offene, in einem Winkel zur Förderrichtung verlaufende Filtratkanäle aufweist.

Vorzugsweise ist bei bestimmten Ausführungsformen nach der Erfindung das Mitnehmerband beim Einlauf in die Mitteldruckstufe, d.h. an der Grenze zwischen der Vorentwässerungskammer und der Mitteldruckstufe durch eine Schleuse geführt. Diese Schleuse verhindert, daß der in diesem Bereich noch vergleichsweise flüssige Schlamm sich entgegen der Bewegungsrichtung des Mitnehmerbands bewegen kann.

Die Schleuse ist bevorzugt durch einen dem Mitnehmerband im Abstand gegenüberliegenden Wandungsabschnitt gebildet, welcher mit den freien Oberkanten der Querschotten in Berührung steht. Hierdruch ist der Übergang zwischen der Vorentwässerungskammer und der Mitteldruckstufe ständig durch mindestens eine Querschotte abgedichtet.

Weitere vorteilhafte Merkmale der Erfindung ergeben sich aus den übrigen Unteransprüchen im Zusammenhang mit der nachfolgenden Beschreibung.

Die erfindungsgemäße, die Hochdruck-Entwässerungszone bildende Vorrichtung zeichnet sich durch besonders einfachen mechanischen Aufbau, hohe Stabilität und äußerst wirksame Entwässerung aus, wobei die Verringerung des Schlammvolumens in der Vorentwässerungsphase genutzt wird, um trotz intermittierenden Abwurfs des entwässerten Schlammkuchens eine kontinuierliche Schlammeinspeisung zu ermöglichen.

Ein wesentliches Merkmal der Entwässerungsvorrichtung ist darin zu sehen, daß der vorentwässerte Schlamm vom Bereich der Vorentwässerungsstufe bis zur Schlammkuchen-Abwurfstation geradlinig und horizontal geführt ist.

Im folgenden wird ein bevorzugtes Ausführungsbeispiel der Erfindung anhand der Zeichnung näher beschrieben. In der Zeichnung zeigen in halbschematischer Darstellung:

| | |
|---|---|
| Figur 1 | eine geschnittene Seitenansicht der erfindungsgemäßen Entwässerungsvorrichtung, |
| Figur 2 | eine Draufsicht auf die Vorrichtung gemäß Fig. 1, |
| Figur 3 | einen Schnitt durch die Vorrichtung gemäß Fig. 1 in Richtung III-III, |
| Figur 4 | eine Endansicht der Vorentwässerungsstufe gemäß Fig. in Richtung des Pfeiles IV, |
| Figur 5 | eine seitliche schematische Schnittansicht einer ersten Ausführungsform der erfindungsgemäßen Entwässerungseinrichtung, |
| Figur 6 | in etwas vergrößertem Maßstab eine Schnittansicht etwa längs der Linie II-II von Figur 5, |
| Figur 7 | eine Schnittansicht ebenfalls im vergrößerten Maßstab, etwa längs der Linie III-III von Figur 5, |
| Figur 8 | eine Figur 5 entsprechende Ansicht einer besonders bevorzugten Ausführungsform der Entwässerungseinrichtung nach der Erfindung, |
| Figur 9 | eine Schnittansicht im vergrößerten Maßstab, etwa längs der Linie V-V von Figur 8, |

Figur 10      eine Schnittansicht in vergrößertem Maßstab etwa längs der Linie VI-VI von Figur 8,

Figur 11      eine Schnittansicht in vergrößertem Maßstab etwa längs der Linie VII-VII von Figur 8,

Figur 12      eine Drausicht in Richtung des Pfeils VIII in Figur 8 in vergrößertem Maßstab, welche den Bereich der Vorentwässerungskammer zeigt,

Figur 13      eine Einzelheit in nochmals vergrößertem Maßstab, welcher einen Ausschnitt der Mitteldruckstufe zeigt und die

Figuren 14      bis 17 Figur 5 entsprechende Ansichten verschiedener Ausführungsformen nach der Erfindung.

Die Entwässerungsvorrichtung umfaßt eine Vorentwässerungsstufe 100, eine in Richtung des Schlammtransports A sich hieran anschließend keilförmige Entwässerungsstufe 200 sowie eine sich hieran anschließend Hochdruck-Entwässerungszone 300.

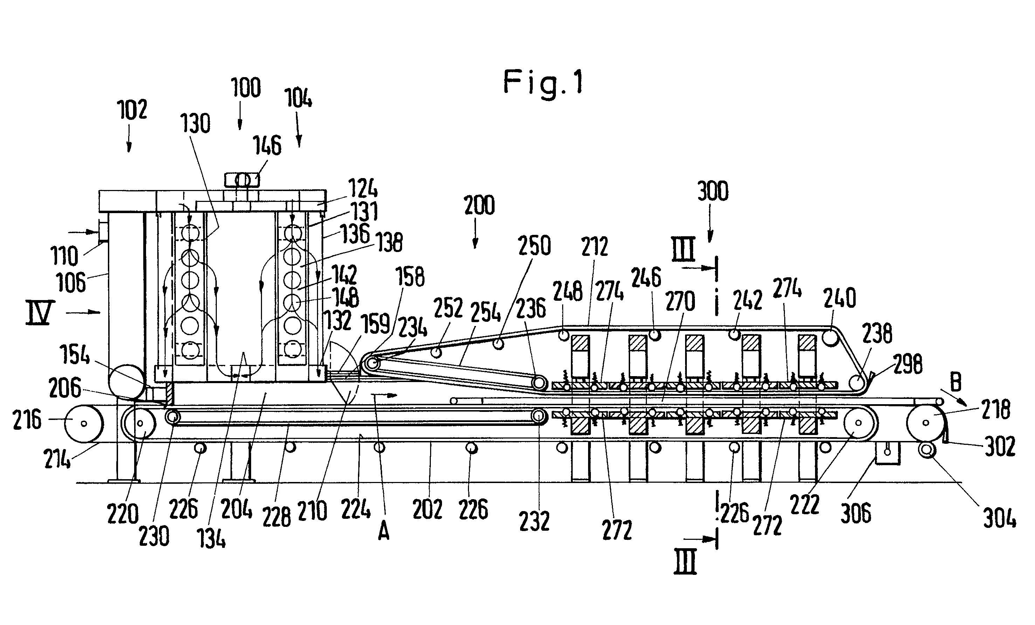

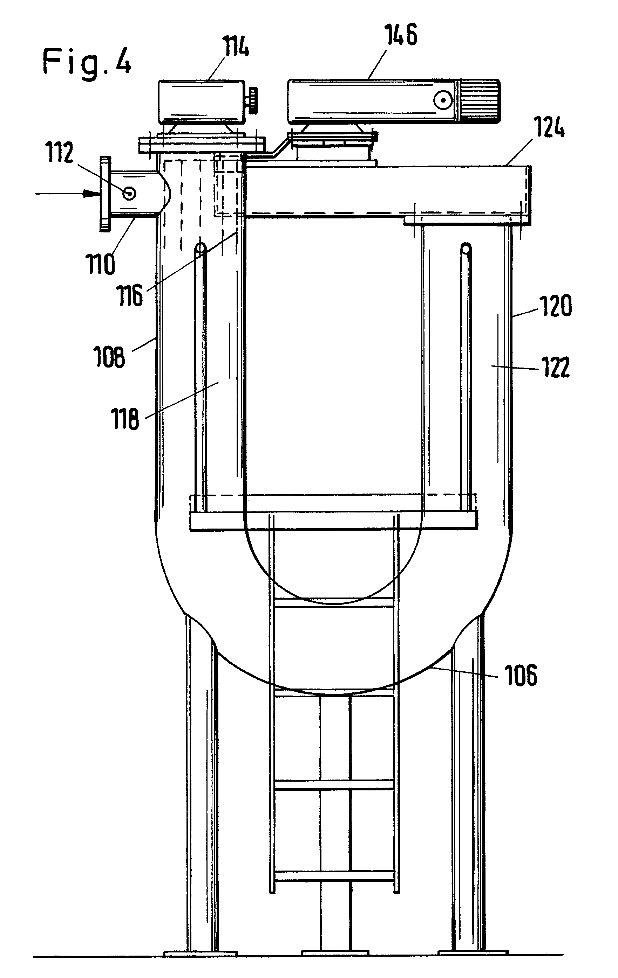

Die insbesondere in den Fig. 1 und 4 in halbschematischer Darstellung gezeigte Vorentwässerungsstufe 100 umfaßt als wesentliche Komponenten einen Misch- und Reaktionsraum 102 sowie einen hiermit verbundenen Entwässerungskorb 104. Der Misch- und Reaktionsraum 102 ist als senkrechtstehender, U-förmiger Rohrkörper 106 ausgebildet und weist im Falle des dargestellten Ausführungsbeispiels eine Höhe von 160 cm und eine Breite von 100 cm auf. Am oberen Endbereich des einen Schenkels 108 des Rohrkörpers 106b befindet sich ein Zuführstutzen 110, über den dem Rohrkörper 106 der zu entwässerne Schlamm unter Beimischung von chemischen Zusätzen wie insbesondere Flokkungsmittel über die Dosiereinrichtung 112 zugeführt wird. Am oberen Ende des Schenkels 108 ist ein regelbarer Getriebemotor 114 angeflanscht, welcher ein Wirbelrad 116 antreibt, das im Bereich des Zuführstutzens 110 innerhalb des Schenkels 108 angeordnet ist und für eine gute Vermischung von Schlamm und Flokkungsmittel sorgt. Dementsprechend wird der vom Schenkel 108 definierte Raum auch Misch- und Wirbelzone 118 genannt.

Der andere Schenkel 120 des U-förmigen Rohrkörpers 106 dient der Beruhigung des in der Zone 118 durchwirbelten Substrats und definiert somit die sogenannte Beruhigungszone 122.

Das obere Ende des Schenkels 120 des U-förmigen Rohrkörpers 106 endet etwa in Höhe der inneren Unterseite des Zuführstutzens 110 und ist mit einem nach oben offenen Kanalsystem 124 verbunden, in welches der mit Flockungsmittel versetzte und über den Zuführstutzen 110 in den Rohrkörper 106 eingeführte Schlamm durch freien Überlauf gelangt.

Über das Kanalsystem 124 wird der zu entwässernde Schlamm nunmehr dem Entwässerungskorb 104 zugeführt. Der Entwässerungskorb 104 umfaßt zwei senkrechtstehende konzentrische Siebkörbe 130, 131 mit vertikal Achse und einer Höhe von etwa 150 cm. Über das Kanalsystem 124 wird der zu entwässernde Schlamm in den zwischen den Siebkörben 130, 131 vorhandenen Ringraum geleitet, wobei der Schlamm aufgrund des sich aufbauenden hydrostatischen Druckes der Suspension durch die Öffnungen der Siebkörbe 130, 131 hindurch sowohl nach innen durch den inneren Siebkorb 130 hindurch als auch nach außen durch den äußeren Siebkorb 131 hindurch entwässert wird. Am unteren Ende der Siebkörbe 130, 131 ist eine um den Siebkorb 131 herum verlaufende Sammelrinne 132 zum Auffangen und Sammeln des durch die Sieböffnungen hindurchgetretenen Filtrats angeordnet. Entsprechende Sammelrinnen 134 befinden sich im Inneren des inneren Siebkorbs 130, um das nach Innen entwässerte Filtrat aufzufangen. Das aufgefangene und gesammelte Filtrat wird sodann über eine mit den Sammelringen verbundene Abführleitung abgeführt.

Die Siebkörbe 130, 131 bestehen vorzugsweise aus Stahl und weisen geeignete Entwässerungsstrukturen auf; insbesondere können sie als Spaltsieb ausgebildet sein. Außerhalb des Siebkorbs 131 ist vom Siebkorb 131 beabstandet ein Tuch 136 angeordnet, welches am Kanalsystem 124 befestigt ist und als Spritzschutz dient. Die unteren Enden des Tuchs 136 liegen innerhalb der Sammelrinne 132.

Innerhalb des Siedekorbs 130 ist eine Reinigungsvorrichtung 138 angeordnet, welche vier vertikale, sich radial nach außen erstreckende Flügel 142 umfaßt, an deren inneren und äußeren, vertikalen Kanten Bürstenleisten befestigt sind, die mit der inneren Oberfläche des Siebkorbs 131 bzw. mit der äußeren Oberfläche des Siebkorbs 130 in Berührung stehen. Die Flügel 142 werden mittels eines oberhalb der Siebkörbe 130, 131 angeflanschten Getriebemotors 146 gemeinsam angetrieben. Die sich drehende Reinigungsvorrichtung 138 aktiviert die Filterfläche der Siebkörbe 130, 131, indem die sich ansetzenden Feststofe immer wieder abgestreift werden und so die Sieböffnungen offengehalten werden. In den sich in radialer Richtung erstreckenden Flügeln 142 sind kreisförmige Öffnungen 148 ausgebildet, die über die gesamte Höhe der Flügel verteilt sind und als Schlammschikanen dienen.

Die Basis des U-förmigen Rohrkörpers 106 ist über eine mittels eines Schiebers verschließbare Rohrleitung 154 mit dem unterhalb der Siebkörbe 130, 131 angeordneten Raum verbunden, um den Rohrkörper 106 bei Bedarf auf einfache Weise entleeren zu können.

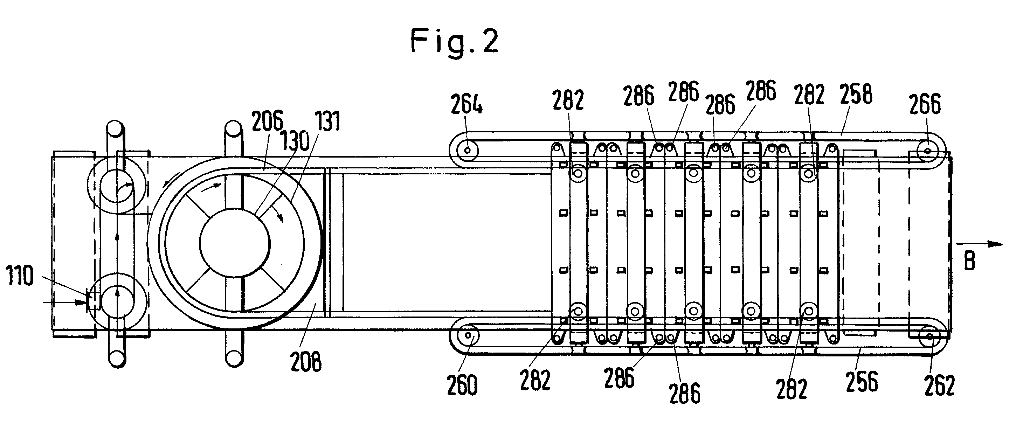

Der Entwässerungskorb 104 ist, wie sich insbesondere aus den Fig. 1 und 2 deutlich ergibt, oberhalb einer insgesamt mit der Bezugsziffer 202 bezeichneten unteren Bandanordnung angeordnet, deren Aufbau weiter untern näher beschrieben wird. Wie insbesondere aus Fig. 2 ersichtlich, ist der zwischen dem unteren Ende des Entwässerungskorbs 104 und der gegenüberliegenden Oberfläche der unteren Bandanordnung 202 vorhandene Raum 204 seitlich über ein Blech 206 derart abgedichtet, daß der aus dem Entwässerungskorb 104 austretende, vorentwässerte Schlamm in der Darstellung gemäß Fig. 1 weder nach links noch seitlich entweichen kann, jedoch von der Bandanordnung 202 in Pfeilrichtung A mitgenommen werden kann. Das Dichtungsblech 206 erstreckt sich zu beiden Seiten der Bandanordnung 202 bis zum Ende der keilförmigen Entwässerungsstufe 200 bzw. zum Anfang der Hochdruck-Entwässerungsstufe 300. Ein sich an den Entwässerungskorb 104 in der Darstellung gemäß Fig. 1 und 2 rechts anschließendes oberes Abdeckblech 208 sorgt dafür, daß der vorentwässerte Schlamm in einem geschlossenen Kanal 210 geführt ist.

Zwischen der keilförmigen Entwässerungsstufe 200 und dem Entwässerungskorb 104 ist im geschlossenen Kanal 210 eine Regelklappe 158 angeordnet, welche den Kanal 210 wahlweise vollkommen verschließen, vollkommen freigeben oder teilweise freigeben kann, je nach Betriebsart der Anlage und je nach Flüssigkeitsgehalt des vorentwässerten Schlamms. Über eine oberhalb der Regelklappe 158 angeordnete Inspektionsklappe 159 ist das Innere das Kanals 210 von außen zugänglich.

Nach Durchtritt durch den Kanal 210 gelangt der vorentwässerte Schlamm in die keilförmige Entwässerungsstufe 200, in welcher eine obere, insgesamt mit der Bezugsziffer 212 bezeichnete Bandanordnung, welche synchron zur unteren Bandanordnung 220 bewegt wird, derart unter spitzem Winkel in Richtung zur unteren Bandanordnung 202 geführt ist, daß dort ein sich keilförmig verjüngender Entwässerungsraum entsteht. Für die seitliche Abdichtung im Bereich der keilförmigen Entwässerungsstufe 200 sorgt das seitliche Blech 206. Anschließend an die keilförmige Entwässerungsstufe 200 schließt sich die Hochdruck-Entwässerungsstufe 300 an, die weiter unten noch näher beschrieben wird.

Die untere Bandanordnung 202 umfaßt ein endloses Filterband 214, welches zwischen zwei endseitigen Umlenkrollen 216, 218 umlaufend geradlinig und im wesentlichen horizontal geführt ist. Zur Unterstützung des Filterbandes 214 ist ein innerhalb des Filterbandes 214 angeordnetes und gemeinsam mit diesem zwischen Umlenkrollen 220, 222 umlaufendes Trägerband vorgesehen, welches mit geeigneten Entwässerungstrukturen wie Kanälen und dergleichen zum Abführen des Filtrats versehen ist und daher als Kanalband 224 bezeichnet wird. Das Untertrum der unteren Bandanordnung 201 wird über Stützwalzen 226 abgestützt, wähend zur Abstützung des Obertrums der unteren Bandanordnung 202 im Bereich der Vorentwässerungsstufe 100 und im Bereich der keilförmigen Entwässerungsstufe 200 ein gemeinsam mit der unteren Bandanordnung 202 umlaufendes Kettengliederband 228 vorgesehen ist, welches innerhalb der vom Kanalband 224 gebildeten geschlossenen Schlaufe zwischen zwei Umlenkrollen 230, 232 umläuft.

Die obere Bandanordnung ist im Falle des vorliegenden Ausführungsbeispiels als glattes Druckband 212 ausgebildet. Das obere Druckband läuft von einer nahe der Inspektionsklappe 159 angeordneten Umlenkwalze 234 in Pfeilrichtung A gesehen schräg nach unten bis zur Umlenkwalze 236, welche der Umlenkrolle 232 gegenüberliegt, und von hier aus ist das Druckband 212 parallel zur unteren Bandanordnung 202 bis zu einer Umlenkrolle 238 geführt, welche der Umlenkrolle 222 gegenüberliegt und das Ende der Hochdruck-Entwässerungsstufe 300 definiert.

Über weitere Umlenkrollen 240 bis 252 wird das Druckband 212 zurück zur Umlenkrolle 234 geführt. Zur Unterstützung des Druckbandes im Bereich der keilförmigen Entwässerungsstufe 200 ist wiederum ein Kettengliederband 254 vorgesehen, welches gemeinsam mit dem Druckband 212 um die Umlenkrollen 234, 236 umläuft.

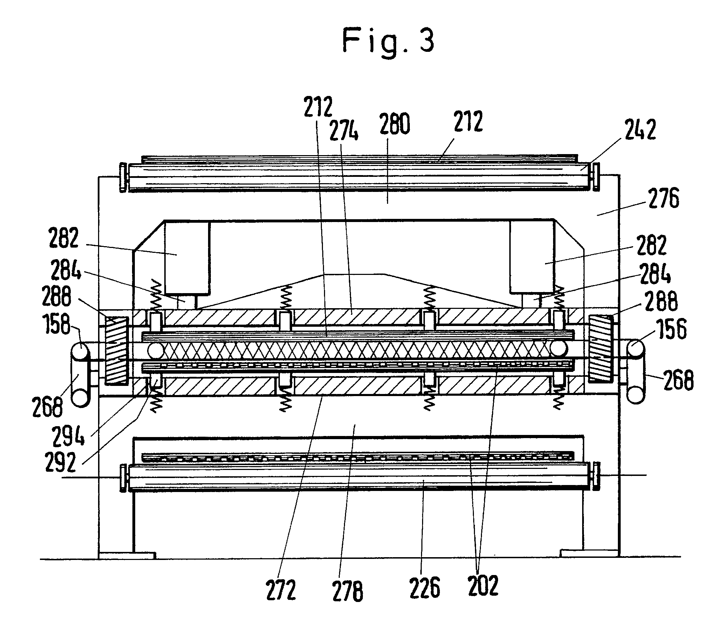

Zur seitlichen Abdichtung des Schlammkammervolumens im Bereich der Hochdruckentwässerungsstufe 300 sind zu beiden Seiten des Schlammkammerraumes gemeinsam mit den Bandanordnungen 202, 212 umlaufende, endlose Dichtungsringe 256, 258 vorgesehen, welche über Umlenkrollen 260 bis 266 mit vertikalen Drehachse umlaufen und somit in einer horizontalen Umlaufbahn geführt sind, wie insbesondere aus Fig. 2 deutlich wird. Zum Unterstützen der äußeren, zurücklaufenden Bereiche der Dichtungsringe 256, 258 sind mehrere Stützrollen 268 vorgesehen, vgl. insbesondere Fig. 3.

Das Schlammkammervolumen 270 im Bereich der Hochdruckentwässerungsstufe 300 wird somit oben und unten durch die oberen bzw. untere Bandanordnung 212 bzw. 202 und seitlich durch die mitlaufenden Dichtringe 256, 258 eingeschlossen.

Im Bereich der Hochdruck-Entwässerungsstufe 300 durchläuft das Schlammkammervolumen 270 eine Anzahl von stationären Druckplattenpaaren, von denen ein jedes eine untere, fest verlagerte Druckplatte 272 und eine obere, der unteren Druckplatte 272 genau gegenüberliegende, in vertikaler Richtung bewegbare Druckplatte 274 aufweist. Jedem Druckplattenpaar 272, 274 ist ein klammerartiger Rahmen 276 zugeordnet. Während, wie erwähnt, die unteren Druckplatten 272 am unteren Querbalken 278 des Rahmens 276 festverlagert sind, sind am oberen Querbalken 280 des Rahmens 276 seitlich je ein Hydraulikzylinder 282 befestigt, dessen in vertikaler Richtung nach unten wirkende Kolben 284 mit der oberen Druckplatte 274 zusammenwirken, um diese bei Bedarf unter hohem Druck in Richtung zur unteren Druckplatte 272 hin zu drücken, wodurch der im Schlammkammerraum zwischen den Druckplatten befindliche Schlamm unter Hochdruck entwässert wird. Die hierbei auftretenden Presskräfte bleiben innerhalb des Rahmentsystems und belasten nicht die Fundamente.

Wie insbesondere aus Fig. 2 deutlich wird, weist eine jede Druckplatte 272, 274 an jeder Seite vorne und hinten jeweils einen sich in der Ebene der Druckplatte nach außen erstreckenden Arm 286 auf, wobei zwischen gegenüberliegenden Armen gegenüberliegender Druckplatten jeweils eine Druckfeder 288 eingespannt ist. Diese Druckfedern 288 bewirken, daß sich die oberen Druckplatten 274 nach Beendigung des Preßvorgangs von den unteren Druckplatten 272 selbsttätig abheben und somit einen Vorschub der Bandanordnung ermöglichen.Zur Führung der unteren und der oberen Bandanordnung sind jeweils gegenüberliegende Druckrollenpaare 290, 292 vorgesehen, im Falle des Ausführungsbeispiels acht Druckrollenpaare pro Druckplattenpaar. Diese Druckrollen erstrecken sich durch entsprechende Ausnehmungen 294 in den Druckplatten hindurch, wobei ein jedes Druckrollenpaar 290, 292 mittels geeigneter Federelemente 296 aufeinanderzu vorgespannt ist. Hierdurch wird sichergestellt, daß auch bei abgehobenen oberen Druckplatten 274 aufgrund des von den Druckrollenpaaren ausgeübten Drucks das Schlammkammervolumen abgedichtet bleibt.

Anschließend an die Hochdruck-Entwässerungsstufe 300 wird der entwässerte Schlammkuchen in Pfeilrichtung B abgeworfen. Über einen im Bereich der Umlenkrolle 238 angeordneten Schaber 298 wird das Druckband 212 gereinigt. Ein im Bereich der Umlenkrolle 218 angeordneter Schabre 302 dient ebenso wie die anschließende Reinigungsbürste 304 sowie die sich hieran anschließenden Waschdüsen 306 zum Reinigen des Filterbandes.

Im Betrieb der Anlage werden der Schlamm und das Flokkungsmittel kontinuierlich in den Misch- und Reaktionsraum 102 eingespeist. Der Schlamm gelangt durch freien Überlauf über das Kanalsytem 124 in den Ringraum zwischen den beiden Siebkörben 130, 131 des Entwässerungskorbes 104. Das Filtrat fließt nach innen und außen aus dem Ringraum ab und wird über die Sammelrinnen 132, 134 aufgesammelt und abgeführt. Der innerhalb des Ringraumes befindliche Schlamm durchfließt diesen unter stetiger Filtratabgabe. Der untere Boden des Ringraums wird von dem horizontalen Filterband 214 gebildet, wobei in diesem Bereich des Filterbandes der volle hydrostatische Druck als Filtrationsdruck wirksam wird. Die Regelklappe 158 am Ausgang der Vorentwässerungsstufe steuert den Einlauf des Schlamms in die keilförmige Entwässerungsttufe 200. Die stetige Volumenverminderung des Schlamms in der Vorentwässerungsstufe und in der Keilstufe durch Abscheidung von Filtrat hat zur Folge, daß das Schlammvolumen beim Eintritt in der Hochdruck-Entwässerungsstufe 300 je nach Schlammart nur noch etwa 20 bis 30 % des ursprünglichen Volumens beträgt, es hat somit eine Volumenverminderung auf ein Drittel bis ein Fünftel stattgefunden.

Die Schlammeinspeisung, der Durchlauf und die Entwässerung in der Vorentwässerung- und der Keilstufe erfolgen kontinuierlich. Der Durchlauf und die Entwässerung in der Hochdruck-Entwässerungsstufe erfolgen intermittierend. Hierbei dient das ringraumförmige Volumen des Entwässerungskorbs 104 der Vorentwässerungsstufe 100 als Schlammpuffer während der Entwässerungszeit der Hochentwässerungsstufe bei stillstehendem Filterband. Während alle Druckelemente wie Druckplatten und Hydraulikzylidner der Hochdruckstufe in ihrer Position innerhalb der Maschine feststehend sind, d. h. sich mit dem Filterband nicht mitbewegen, bewegt sich das Filterband immer nur im Takt der einstellbaren Entwässerungszeit um die Länge der Hochdruckentwässerungsstufe vorwärts.

Hierbei wird der in der Hochdruck-Entwässerungsstufe entwässerte Schlamm aus der Maschine ausgefahren und die Hochdruck-Entwässerungsstufe füllt sich gleichzeitig wieder mit dem Schlamm aus der Keilstufe. Der Schlammspiegel im Entwässerungskorb der Vorentwässerungsstufe sinkt hierbei ab und füllt sich während der Entwässerungsperiode in der Hochdruck-Entwässerungsstufe wieder auf.

Der Preßdruck der Hochdruck-Entwässerungszone kann über Zeit- bzw. Druckrelais sowohl bezüglich Druckhöhe wie bezüglich Druckzeit variabel eingestellt werden. Auch kann die Länge der Hochdruck-Entwässerungszone je nach Bedarf beliebig variiert werden. Weiterhin kann die Gesamtlänge der Hochdruck-Entwässerungszone in einzelne Funktionsstrecken unterteilt werden, wie z.B. Hochdruck-Entwässerung, Waschen, Nachentwässern, Preßluftblasen, usw..

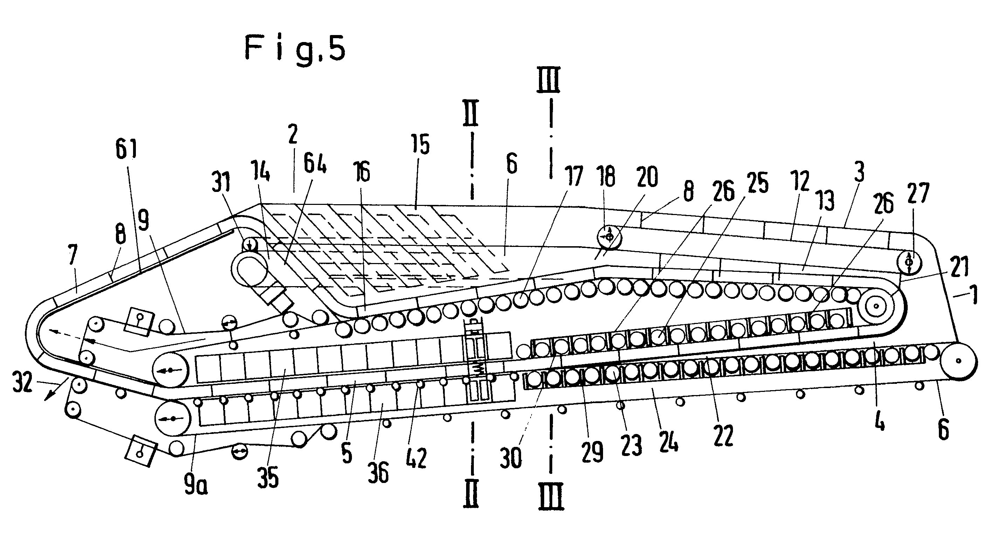

Die in Figur 5 schematisch veranschaulichte, allgemein mit 1 bezeichnete Entwässerungsvorrichtung nach der Erfindung umfaßt eine Vorentwässerungsstufe 2, eine erste Mitteldruckstufe 3 leichten Drucks, eine Mitteldruckstufe 4 höheren Drucks und letztlich eine Hochdruckstufe 5.

Bei der in Figur 5 stark schematisch veranschaulichten Ausführungsform sind zwei Filterbänder 6 und 7 vorgesehen, von dene das unter Filterband 6 entgegen dem Uhrzeigersinn in der Mitteldruckstufe 4 höheren Drucks und in der Hochdruckstufe 5 umläuft, während das obere Filterband 7 im Uhrzeigersinn sämtliche Stufen durchläuft.

Dem oberen Filterband 7 sind in regelmäßigen Abständen angeordnete Querschotten 8 zugeordnet, welche weiter unten noch näher erläutert werden.

Bei der Ausführungsform gemäß Figur 5 sind die Filterbänder 6 und 7 auf mit umlaufenden Tragbändern 9 abgestützt, welche mit auf der Seite der Filterbänder 6 und 7 offenen Filtratkanälen (nicht dargestellt) versehen sind.

Wie ferner schematisch in Figur 5 veranschaulicht, sind zwei umlaufende Dichtungen 10, 11 vorgesehen, welche für die seitliche Abdichtung des zwischen den Filterbändern aufgenommenen Schlammkammervolumens Sorge tragen.

In der ersten leichten Mitteldruckstufe 3 ist ein weiteres umlaufendes Band veranschaulicht, welches als Mitnehmerband 12 ausgebildet ist und ebenfalls mit Querschotten 8 versehen ist. Das Mitnehmerband 12 läuft entgegen dem Uhrzeigersinn um und bildet zusammen mit dem Filterband 7 einen ersten keilförmigen Druckraum 13.

Die in Figur 5 schematisch veranschaulichte Vorentwässerungsstufe 2 weist als wesentlich Komponenten einen Misch- und Reaktionsraum 14 und eine großvolumige Vorentwässerungskammer 15 auf, welche die Puffereinrichtung zwischen der kontinuierlichen Schlammeinspeisung auf der Vorentwässerungsseite und dem diskontinuierlichen Abwurf am Ausgang der Hochdruckstufe bildet. Der Boden 16 der Vorentwässerungskammer 15 ist durch das umlaufende Filterband 7 mit den Querschotten 8 gebildet, welches auf dem Tragband 9 abgestützt ist. Der Boden 16 der Vorentwässerungskammer steigt leicht schräg nach oben in Förderrichtung an, wozu die das Tragband lagernden Rollen 17 bis zum Eingang der ersten leichten Mitteldruckstufe 2 ansteigend gelagert sind.

Wie gezeigt, sind in der Vorentwässerungskammer 17 zusätzliche Filterflächen 18 zur Abtrennung des Filtrats von der Trockensubstanz des Schlamms vorgesehen, welche bei der bevorzugten Ausführungsform als in der Vorentwässerungskammer 15 in schräg aufrechtstehender Anordnung vorgesehene Spaltsiebe 19 ausgebildet sind.

Durch diese hochwirksame Vorentwässerung erfolgt eine erhebliche Volumenreduzierung, so daß am Eingang 20 der ersten Mitteldruckstufe 3 im Minimum nur noch das halbe bis ein Drittel Volumen weiterzufördern ist.

In der Mitteldruckstufe läuft das obere Mitnehmerband 12 mit seinen Querschotten 8 auf das Filterband 7 wie veranschaulicht auf, derart, daß sich die einander gegenüberliegenden Querschotten der beiden Bänder überdecken, so daß der Schlamm portionsweise durch den keilförmigen Druckraum 13 gefördert wird. Am Ausgang 21 der ersten Mitteldruckstufe wird der Schlamm gewendet und auf das auf seinem Tragband 9a abgestützte Filterband 6 übergeben. Die Mitteldruckstufe 4 höheren Drucks weist ebenfalls einen keilförmigen Druckraum 22 auf, welcher zwischen dem Filterband 6 und dem hier darüberliegenden Filterband 7 mit seinem Tragband gebildet ist, so daß bezüglich der Mitteldruckstufe 4 das Filterband 7 mit seinem Tragband 9 ein Druckband bildet.

In der Mitteldruckstufe 4 sind als Filterband 6 mit dem dazugehörigen Tragband 9 durch eine Vielzahl von Druckwalzen 23 abgestützt, welche dicht nebeneinanderliegend in einem gemeinsamen Lagerungsrahmen 24 gelagert sind. Das oberhalb des keilförmigen Raums 22 verlaufende Filterband 7 mit den Querschotten 8, welches bezüglich der Mitteldruckstufe 4 das Druckband bildet und ebenfalls auf einem Tragband 9 abgestützt ist, läuft ebenfalls über eine Vielzahl von darüber angeordneten Druckwalzen 25, welche einen gemeinsamen Lagerungsrahmen 26 aufweisen.

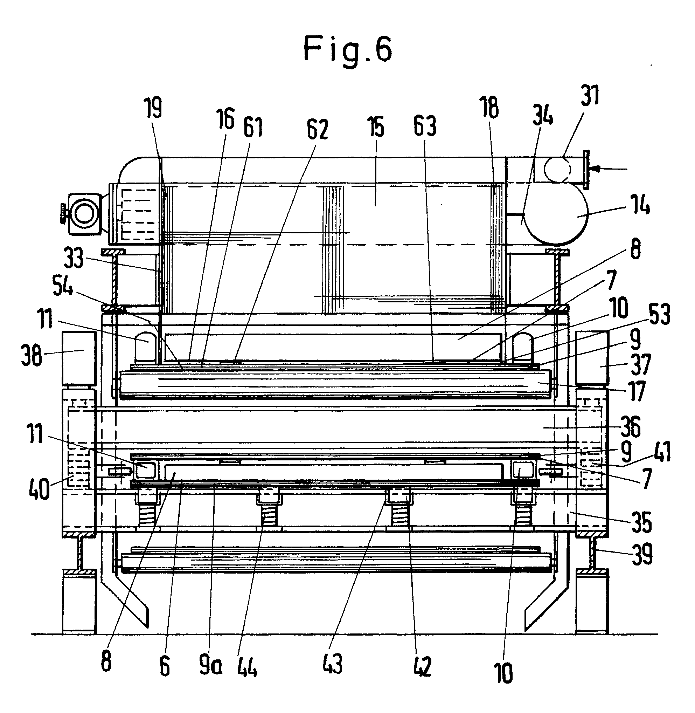

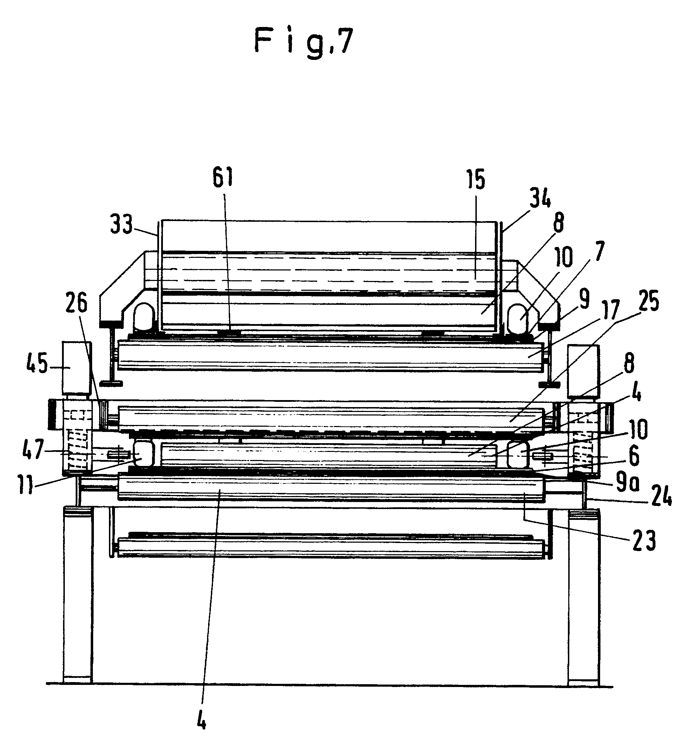

Wie weiter unten noch unter Bezugnahme auf die genaueren Zeichnungen gemäß den Schnittansichten nach Figur 6 und 7 näher erläutert wird, kann der durch die Druckwalzen 25 über die Tragbänder 9 und die beiden Filterbänder 6 und 7 auf das Schlammvolumen in dem keilförmigen Raum 22 ausgeübte Druck verändert werden, indem mindestens einer der Lagerungsrahmen 24 oder 26 eine Schwenklagerung an einem Ende aufweist, wobei dann Druckerzeuger vorgesehenen sind, um den schwenkbaren Rahmen in Richtung des anderen Rahmens zu drücken.

Eine gleiche Konstruktion kann auch für die Mitteldruckstufe 3 leichteren Drucks gewählt werden, indem hier die Lagerung der beiden Umlenkrollen 27 und 28 verschwenkbar und mit Druck beaufschlagbar gestaltet sein kann.

Wie aus Figur 5 ersichtlich, sind in den beiden Lagerungsrahmen 24, 26 zwischen den Druckwalzen 23 bzw. 25 parallel zu den Druckwalzen Tragleisten 29 bzw. 30 vorgesehen, welche bevorzugt aus einem reibungsarmen Material bestehen bzw. mit einem solchen beschichtet sind.

Die Tragleisten 29, 30 sind derart bezüglich der Druckwalzen 23, 25 angeordnet, daß einer oberen Druckwalze 25 jeweils eine untere Tragleiste 29 und einer unteren Druckwalze 23 jeweils eine obere Tragleiste 30 gegenüberliegt. Durch diese Konstruktion wird beim Aufbringen von Druck, welcher ja wie oben erwähnt im Moment des Stillstands der Bänder aufgebracht wird, eine besonders gleichförmige Druckfläche beiderseits des Schlammvolumens erzeugt. Möglicherweise kann es hierbei von Vorteil sein, die Tragleisten abgefedert auszubilden.

Ehe auf die weiteren Einzelheiten gemäß der Schnittansichten nach Figur 6 and 7 eingegangen wird, soll im folgenden kurz die Funktionsweise der Vorrichtung beschrieben werden.

Es wird davon ausgegangen, daß, wie oben erwähnt, die Vorrichtung taktweise arbeitet, wobei der Takt durch die Verweilzeit des Schlammvolumens in der Hochdruckstufe 5 bestimmt ist. Der zu entwässernde Schlamm wird kontinuierlich über eine allgemein mit 31 bezeichnete Mischreaktionseinheit in die Vorentwässerungskammer 15 eingespeist und wird ebenfalls kontinuierlich mittels des durch das Filterband 7 gebildeten Bodens und die Spaltsiebe 19 kontinuierlich entwässert, wobei die Entwässerung durch den im Inneren der Vorentwässerungskamme 15 herrschenden hydrostatischen Druck unterstützt wird. Geht man bei der Betrachtungsweise vom momentanen Stillstand der Filterbänder, Druckbänder und Mitnehmerbänder aus, so wird beim nächsten Öffnungshub der Hochdruckstufe 5,während dessen sämtliche Bänder um einen Abschnitt vorgefahren werden, der der Breite der Hochdruckstufe entspricht, derjenige Bereich des Filterbandes 7, welcher zuvor den Boden 16 der Vorentwässerungskammer 15 bildete, in Richtung der ersten Mitteldruck leichteren Drucks gefördert und hier durch das von oben auflaufende Mitnehmerband 12 in dem keilförmigen Raum 13 einer weiteren Entwässerung unter mittlerem Druck unterzogen. Gleichzeitig wird der vorher in dem keilförmigen Raum enthaltene Volumenanteil des Schlammvolumens durch Bewegung der Filterbänder 6 und 7 in den keilförmigen Raum 22 der Mitteldruckstufe 4 höheren Drucks gefördert, während das darin enthaltene zuvor entwässerte Volumen in die Hochdruckstufe bewegt wird.

Nachdem die Bänder um eine der Breite der Hochdruckstufe 5 entsprechende Distanz vorgefahren wurden, wird die Vorrichtung wiederum angehalten und ist in Bereitschaft für den nächsten Druckzyklus,während die Schlammeinspeisung in die Vorentwässerungskammer 15 kontinuierlich weiterläuft.

Während des Druckzyklus wird das Schlammkammervolumen in der Hochdruckstufe 5 unter Stillstand der Bänder der Hochdruckwirkung zwischen den weiter unten noch näher erläuterten Druckplattenpaaren ausgesetzt.

Da zu diesem Zeitpunkt die Bänder ohnehin stillstehen, wird gleichzeitig in der Mitteldruckstufe 4 durch die vorgesehenen Druckzeuger beim Ausführungsbeispiel auf den oberen Lagerungsrahmen 26 ein Druck ausgeübt, so daß das in dem keilförmigen Raum 22 befindliche Schlammkammervolumen ebenfalls einer erhöhten Entwässerung unter Druck ausgesetzt wird.

Gegebenenfalls kann zum gleichen Zeitpunkt über das Mitnehmerband 12 in der Mitteldruckstufe 3 ein zusätzlicher Druck ausgeübt werden.

Während der Druckphase sorgen die seitlichen Dichtungen 10, 11 besonders dafür, daß der unter Druck entwässerte Schlamm seitlich nicht austreten kann.

Anschließend an die Hochdruckstufe 5 wird der entwässerte Schlammkuchen in Richtung des Pfeils 32 abgeworfen. Über die in Figur 1 schematisch veranschaulichten Schabe-und Reinigungseinrichtungen weden anschließend die Bänder gereinigt. Während des Abwurfs wird wiederum eine Portion des zu entwässernden Schlamms zwischen den einzelnen Stufen 2, 3, 4 und 5 vorbewegt, um den Ausgangspunkt für den nächsten Druckzyklus zu bilden.

Aus der Schnittansicht gemäß Figur 5 sind Einzelheiten der Vorentwässerungskammer 15 under der darunter angeordneten Hochdruckstufe 5 ersichtlich. Wie gezeigt, verlaufen im Bereich der Vorentwässerungsstufe 2 die umlaufenden Dichtungen 10, 11 außerhalb der Seitenwandungen 33, 34 der Vorentwässerungskammer 15.

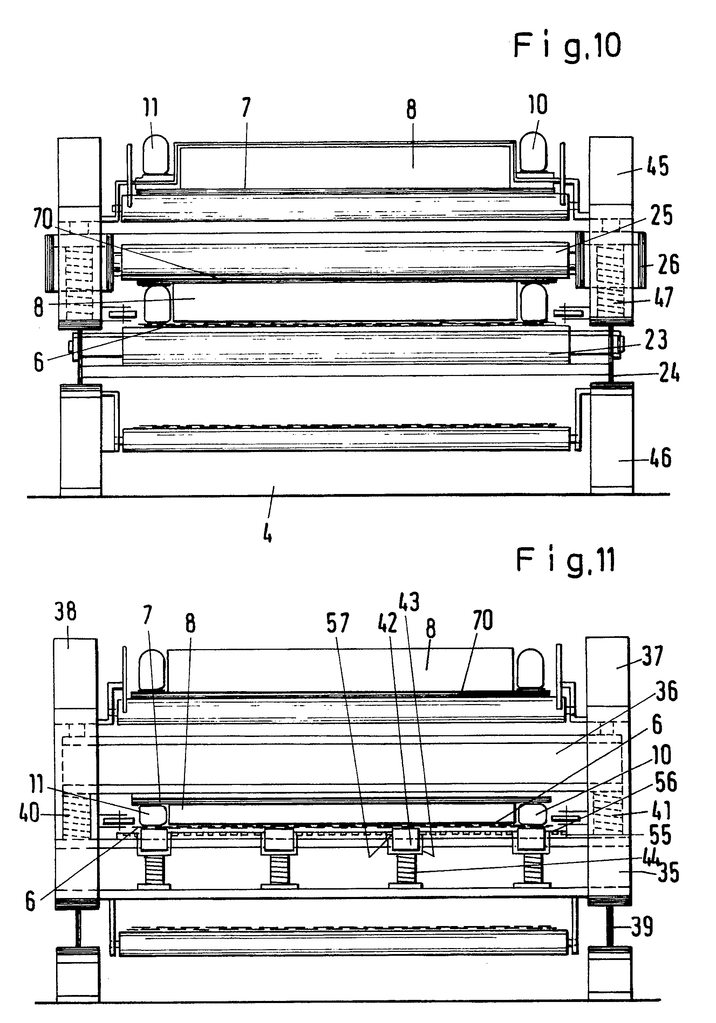

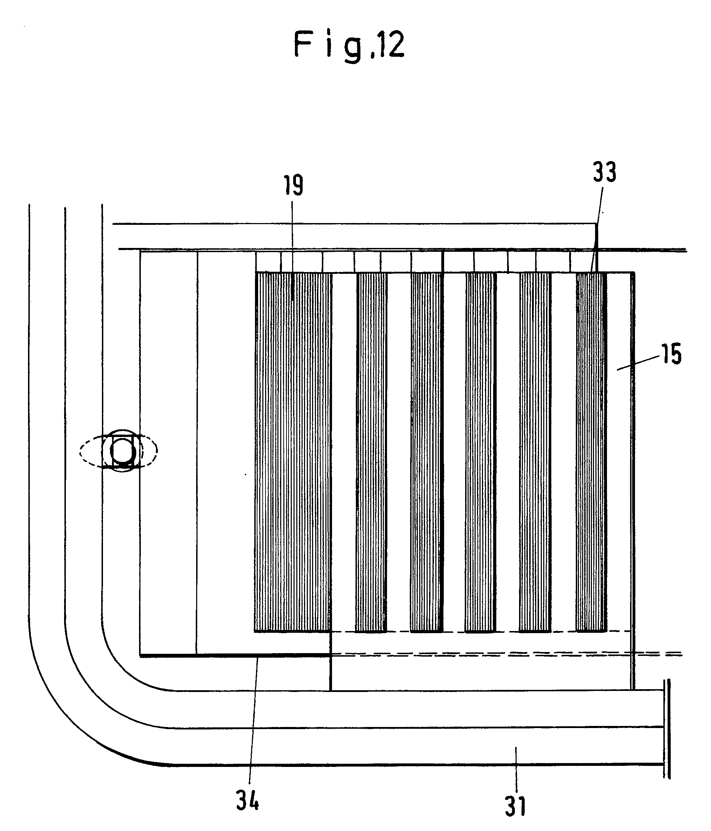

Wie ferner aus der Schnittansicht ersichtlich, sind die Querschotten 8 auf einem gesondert umlaufenden Querschottenband 61 befestigt, welches gemeinsam mit den Dichtungen 10, 11 umläuft, jedoch im Bereich der Vorentwässerungsstufe innerhalb der Seitenwandungen 33, 34 der Vorentwässerungskammer 15 liegt. Das Querschottenband 61 besteht aus zwei umlaufenden Gummistreifen 62, 63, auf denen die Querschotten befestigt sind. Die gleiche Konstruktion ist bei den Ausführungsformen gemäß Figur 10 und 11 angewandt.

In der Ansicht gemäß Figur 1 läuft das Querschottenband 61 getrennt von dem Filterband 7 von oben entlang einer Rückwand 64 in die Vorentwässerungskammer 15 ein.

In der Hochdruckstufe 5 liegt das zwischen den Querschotten proportionsweise Schlammvolumen zwischen dem Filterband 7, dem dahinter liegenden Tragband 9 und dem unteren Filterband 6 mit dem dazugehörigen Tragband 9a, wobei die seitliche Begrenzung durch die umlaufenden Dichtungen 10, 11 gegeben ist, welche in diesem Bereich zwischen den Filterbändern 6 und 7 zusammengepreßt sind.

Die Hochdruckstufe 5 besteht aus einer Anzahl von stationären Druckplattenpaaren, die je aus einer unteren fest gelagerten Druckplatte 35 und einer oberen, in senkrechter Richtung bewegbaren Druckplatte 36 bestehen. Jedem Paar von Druckplatten 35 und 36 ist ein Paar von Hydraulikzylindern 37, 38 zugeordnet, mittels derer die obere Druckplatte 36 in Richtung der stationären unteren Druckplatte 35 gedrückt werden kann. Die untere Druckplatte 35 ist hierbei fest in einem Rahmen 39 gelagert.

Zum Öffnen der Hochdruckstufe 5 nach Entlastung der Hydraulikzylinder 37, 38 ist ferner jedem Paar von Druckplatten 35 und 36 ein Paar von zwischen diesen wirksamen Federn 40, 41 vorgesehen, welche nach Beendigung des Druckhubes die obere Druckplatte 36 gegenüber der unteren Druckplatte 35 anheben. Durch das Paar von Federn 40, 41 ist gewährleistet, daß nach Beendigung des Preßvorganges eine selbsttätige Anhebung der oberen Druckplatten 36 erfolgt, so daß ein Vorschub der Bandanordnung möglicht ist. Zur Führung der unteren Bandanordnung bestehend aus dem Filterband 6 und dem Tragband 9a sind in jeder der unteren Druckplatten 35 vier Druckrollen 42 vorgesehen, welche sich durch entsprechende Öffnungen 43 durch die Druckplatte 35 hindurch erstrecken und über deren Oberfläche vorstehen. Die Druckrollen 42 sind auf geeigneten Federelementen 44 gelagert, welche ebenfalls in den Öffnungen 43 angeordnet sind. Durch diese Anordnung wird gewährleistet, daß nach Entlasten der Hochdruckstufe die Bandanordnung 6, 7 geringfügig angehoben wird, so daß beim Bandvorschub die Reibung gegenüber den unteren Druckplatten 35 herabgesetzt ist.

Ferner ist bevorzugt, daß die am weitesten außen liegenden Druckrollen 42 unmittelbar dort angeordnet sind, wo zwischen den beiden Bandanordnungen die mitlaufenden Dichtungen 10, 11 liegen, so daß durch den zusätzlichen, durch die Druckrollen 42 ausgeübten Druck bereits beim Beginn des Drucktaktes die seitliche Abdichtung unterstützt wird.

Aus der Schnittansicht gemäß Figur 7 sind Einzelheiten der besonders bevorzugten Ausführungsform der Mitteldruckstufe 4 ersichtlich, wobei bezüglich der weiteren Einzelheiten auf oben stehende Beschreibung verwiesen werden kann.

In der Mitteldruckstufe 4 ist eine ähnliche Anordnung ge. troffen, wie in der Hochdruckstufe 5, indem während des Bandstillstandes auf das in dem Keilraum 22 befindliche Schlammvolumen ein erhöhter Druck ausgeübt werden kann. Zu diesem Zwecke sind an beiden Seiten der einander gegenüberliegenden Druckwalzenpaare 23 Hydraulikzylinder 45 vorgesehen. Bei dem veranschaulichten Ausführungsbeispiel sind die unteren Druckwalzen in einem stationären Lagerungsrahmen 24 zusammengefaßt, der auf einem Untergestell 46 ruht. Die oberen Druckrollen 25 sind in dem beweglichen Lagerungsrahmen 46 gelagert, welcher durch die Hydraulikzylinder 45 in vertikaler Richtung bewegbar ist. Selbstverständlich kann auch eine Anordnung getroffen werden, bei welcher durch die Hydraulikzylinder 45 die Druckrollen 25 einzeln in vertikaler Richtung bewegbar sind.

Zwischen den Lagerungsrahmen 24 und 26 sind seitlich Druckfedern 47 eingespannt, welche bewirken, daß nach Beendigung des Preßvorganges der obere Lagerungsrahmen 26 bzw. die oberen Druckwalzen 25 selbsttätig angehoben werden, so daß ein Vorschub der Bandanordnung ohne erhöhten Druck möglich ist.

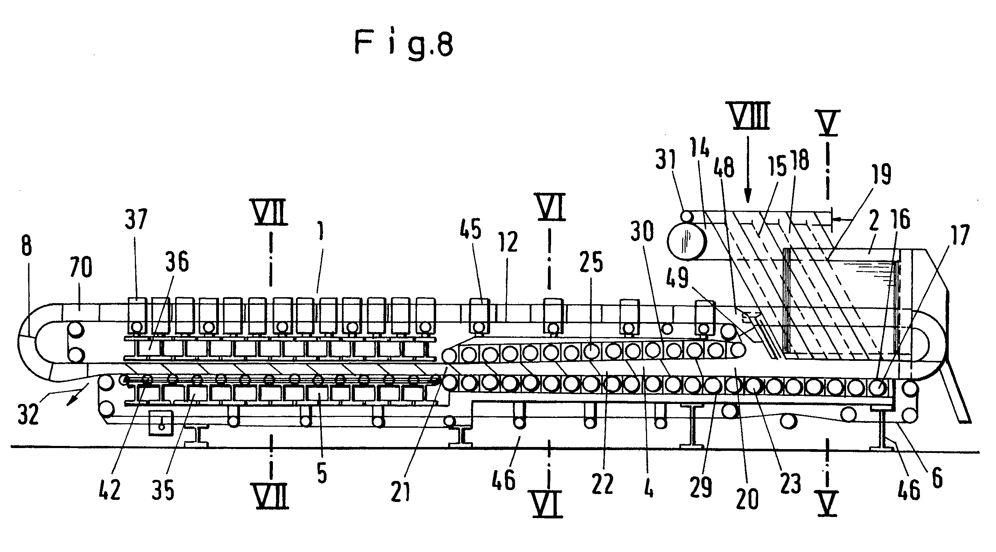

In Figur 8 ist eine besonders bevorzugte Ausführungsform nach der Erfindung in einer Figur 5 entsprechenden Ansicht gezeigt, wobei für gleiche Teile bzw. gleichwirkende Abschnitte gleiche Bezugszeichen verwendet wurden. Gegenüber der Ausführungsform gemäß Figur 5 ist die Ausführungsform gemäß Figur 8 wesentlich einfacher aufgebaut und weist lediglich eine einzige Mitteldruckstufe erhöhten Drucks auf.

Wie gezeigt, grenzt die Mitteldruckstufe 4 unmittelbar an die Vorentwässerungstufe 2 an, wobei im Rahmen der Gesamtvorrichtung lediglich ein Filterband, ein Druckband 70 mit Querschotten 8 und zwei umlaufende Dichtungen verwendet werden.

Am Übergang zwischen Vorentwässerungsstufe 2 und Mitteldruckstufe 4 durchläuft das als Druckband 70 wirksame Mitnehmerband mit den Schotten 8 zunächst eine allgemein mit 48 bezeichnete Druckschleuse, welche verhindert, daß sich der in der Vorentwässerungskammer 15 befindliche Schlamm unter Wirkung des in der Kammer herrschenden hydrostatischen Drucks gegen die Förderrichtung des Mitnehmerbands 12 bewegen kann. Die Schleuse 48 ist bei dem veranschaulichten Ausführungsbeispiel durch einen dem Mitnehmerband 12 im Abstand gegenüberliegenden Wandungsabschnitt 49 gebildet, welcher mit den freien Oberkanten 50 der Querschotten 8 ständig in Berührung steht. Bei Bewegung des Mitnehmerbands 12 im Uhrzeigersinn ist daher die Druckschleuse 48 wie aus Figur 8 ersichtlich ständig mindestens durch eine zwischen zwei Querschotten liegende Kammer abgedichtet.

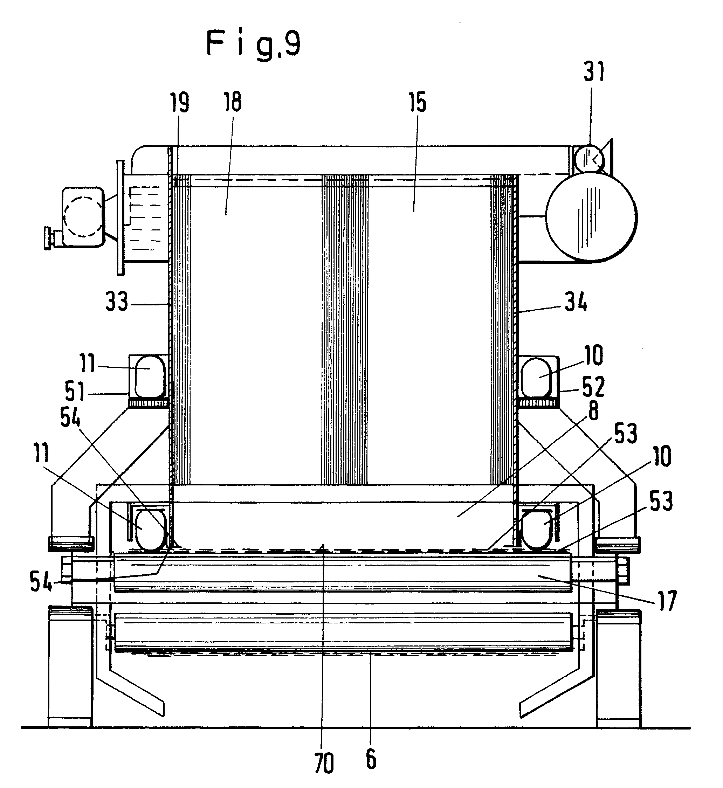

Wie aus der Schnittansicht gemäß Figur 9 ersichtlich,ist der Boden 16 der Vorentwässerungskammer 15 lediglich durch das auf den Rollen 17 abgestützte Druckband 70 mit seinen Querschotten 8 gebildet. Auf Tragbänder konnte wegen der weiter unter näher erläuterten speziellen Gestaltung der Hochdruckstufe 5 verzichtet werden. Wie ferner ersichtlich, laufen bei der Ausführungsform gemäß den Figuren 8 bis 12 die mitlaufendem Dichtungen 10, 11 im Bereich der Vorentwässerungskammer 15 außerhalb deren Seitenwandungen 33, 34, wobei eine Besonderheit gemäß Figur 9 darin besteht, daß die umlaufenden Dichtungen 10, 11 in ihrem jeweils oberen Trum in Filtratabförderrinnen 51, 52 laufen und quasi auf dem darin geförderten Filtrat schwimmend gelagert sind. Die Filtratabförderrinnen 51, 52 sind an den Seitenwänden 33, 34 der Vorentwässerungskammer 15 befestigt.

Die Seitenwändungen 33, 34 sind im Bereich der Vorentwässerungskammer 15 gegenüber dem Druckband 70 durch Dichtungen 53, 54 abgedichtet, welche an den Unterkanten der Wandungen 33, 34 in Berührung mit dem Filterband 7 stehen.

Figur 10 zeigt eine Schnittansicht längs der Linie VI-VI von Figur 8, d.h. im Bereich der Mitteldruckstufe 4. Wie ersichtlich, stimmt der Aufbau hier im wesentlichen mit dem Aufbau gemäß Figur 7 überein, so daß aufgrund der Verwendung gleicher Bezugszeichen auf oben stehende Beschreibung verwiesen werden kann. Der Unterschied besteht jedoch darin, daß hier das Mitnehmerband 12 mit seinen Querschotten 8 im Bereich der Mitteldruckstufe 4 als Druckband 70 eingesetzt ist, wobei die Querschotten 8 an dem Mitnehmerband 12 gelenkig oder zumindest flexibel gelagert sind.

In Figur 11 ist eine Schnittansicht längs der Linie VII-VII von Figur 8 veranschaulicht, d.h. in der Ebene der Hochdruckstufe 5.

Wie gezeigt, ist in der Hochdruckstufe 5 bei der bevorzugten Ausführungsform gemäß Figuren 8 bis 12 anstelle der Tragbänder auf den unteren stationären Druckplatten 35 eine Platte 55 vorgesehen, welche nach oben offene Filtratkanäle 56 aufweist, auf welcher das Filterband 6 aufliegt.

Wie gezeigt, stehen in diesem Falle die Druckrollen 42 außer durch die Öffnungen 43 der Druckplatten 35 zusätzlich durch Öffnungen 57 in der Platte 55 vor, so daß bei Entlastung der Hochdruckstufe 5 durch die Druckrollen 42 über die Federelemente 44 unmittelbar das Filterband 6 zur reibungsarmen Abförderung des Schlammkuchens angehoben wird. Hinsichtlich weiterer Einzelheiten der Darstellung gemäß Figur 11 darf auf oben stehende Beschreibung, insbesondere im Zusammenhang mit Figur 6 verwiesen werden.

Figur 12 zeigt noch eine Draufsicht in Richtung des Pfeils VIII-VIII von Figur 8, wobei lediglich ein Teil der Vorrichtung, nämlich die Vorentwässerungsstufe gezeigt ist. Aus Figur 12 ist die Anordnung der Spaltsiebe 19 und Bestandteile der Mischerreaktionseinheit 31 ersichtlich.

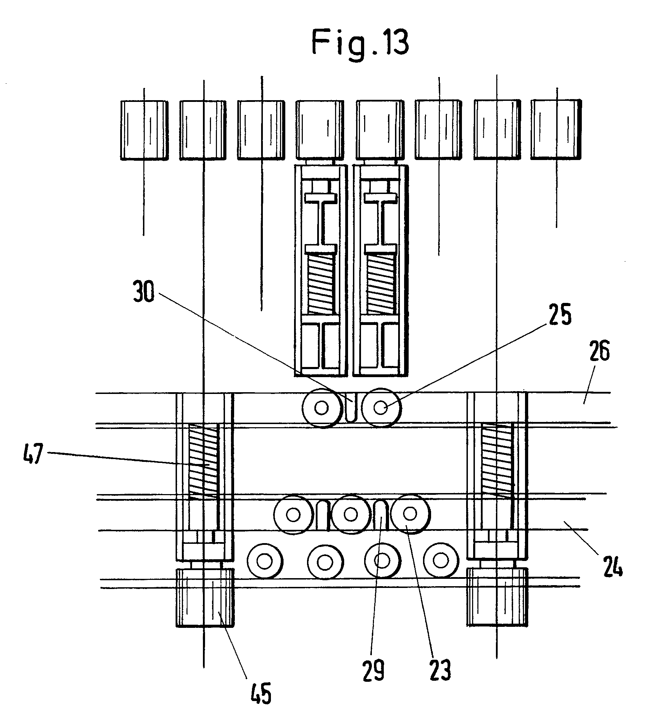

Figur 13 zeigt in einer schematischen Seitenansicht Einzelheiten der Mitteldruckstufe 4, wobei die Zuordnung der Federelemente 44 der Hydraulikzylinder 45 und der Druckwalzen 23, 25 mit den Tragleisten 29, 30 näher gezeigt ist.

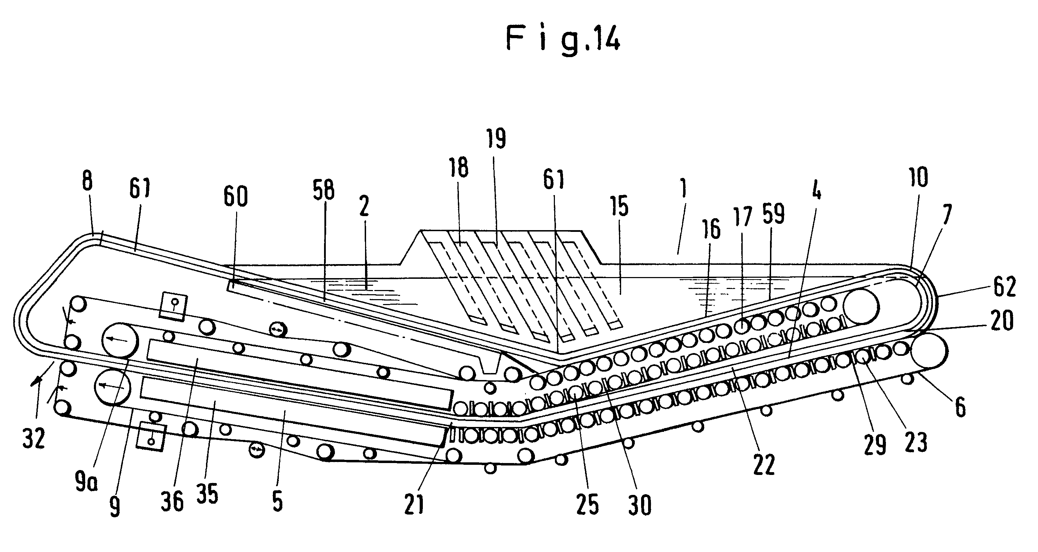

In Figur 14 ist in einer Figur 5 bzw. Figur 8 entsprechenden schematischen seitlichen Schnittansicht eine weitere Ausführungsform der Vorrichtung 1 nach der Erfindung gezeigt. Es wurden wiederum für gleiche bzw. gleichwirkende Teile gleiche Bezugszeichen verwendet.

Bei der Ausführungsform gemäß Figur 14 ist der Boden 16 der Vorentwässerungskammer 12 in zwei Abschnitte 58 und 59 unterteilt, wobei unter dem in Förderrichtung ersten Abschnitt 58 ein großflächiger Entwässerungskasten 60 vorgesehen ist, welcher die Abstützung des Filterbandes 7 in diesem Abschnitt bildet. Der erste Abschnitt 58 des Bodens 16 fällt bis zu einem tiefsten Punkt 61 der Vorentwässerungskamme 15 ab, welcher etwa unterhalb der zusätzlich vorgesehenen Filterflächen 18 in Form von Spaltsieben 19 liegt. In Förderrichtung anschließend ist das Filterband 7 in dem Bodenabschnitt 59 wiederum auf den Rollen 17 abgestützt, wobei dieser Abschnitt 59 wiederum bis zu einem Wendepunkt 62 ansteigend ausgebildet ist. Hinter dem Wendepunkt 62 liegt der Eingang 20 zur Mitteldruckstufe 4. Hinsichtlich der weiteren Einzelheiten kann auf die oben stehende Beschreibung verwiesen werden.

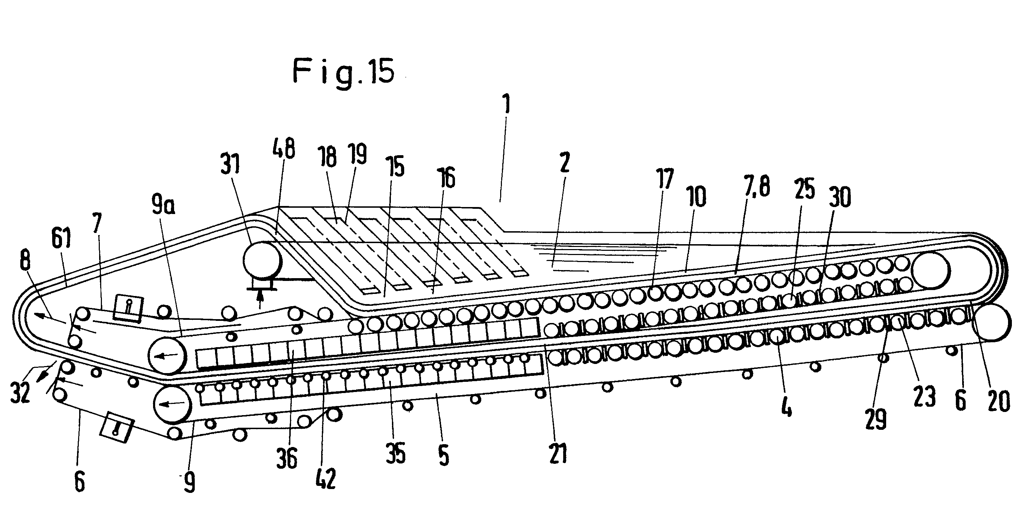

Figur 15 zeigt eine weitere Abwandlung der Vorrichtung 1 nach der Erfindung in einer Figur 14 entsprechenden Darstellung. Durch Verwendung gleicher Bezugszeichen ist die Darstellung gemäß Figur 15 ohne weitere Erläuterungen für sich verständlich.

Es wird darauf hingewiesen, daß bei den Darstellungen gemäß Figuren 14 und 15 zur besseren Klarheit die Hydraulikzylindre 37, 38 und 45 weggelassen wurden.

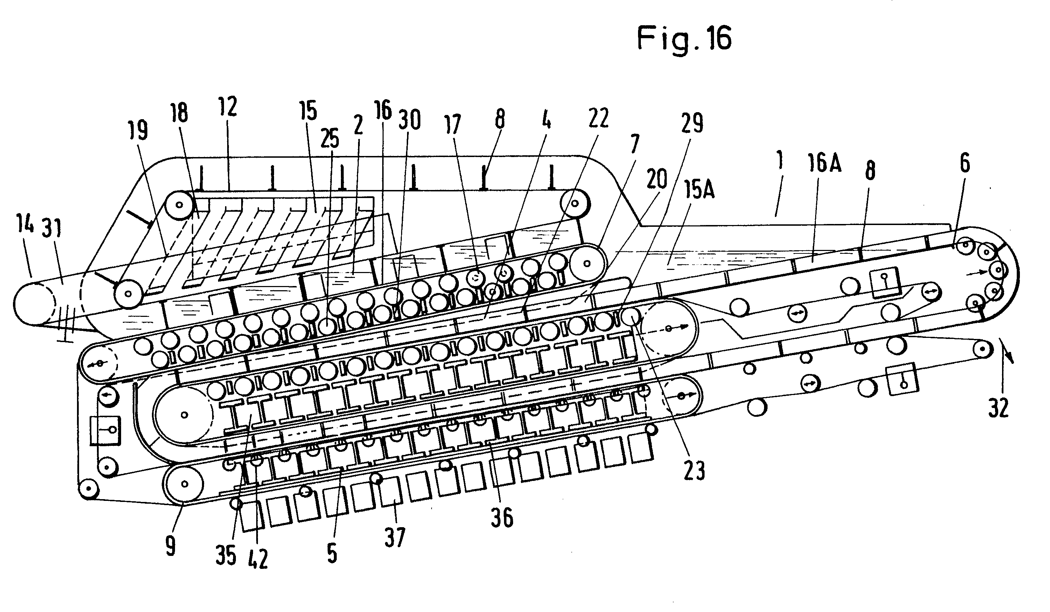

Figur 16 zeigt eine weitere Abwandlung der Vorrichtung 1 nach der Erfindung in einer Figuren 14 und 15 entsprechenden Darstellung. Wesentlicher Unterschied dieser Ausführungsform ist es, daß die Vorentwässerungskammer 15 in zwei Teile 15, 15A unterteilt ist, von denen der zweite Teil 15A unmittelbar vor dem Eingang der Mitteldruckstufe 4 liegt. Hinsichtlich sonstiger Konstruktionsmerkmale entspricht die Ausführungsform gemäß Figur 16 im wesentlichen der Ausführungsform gemäß Figur 1, so daß auf die im Zusammenhang mit Figur 5 gegebene Beschreibung verwiesen werden kann.

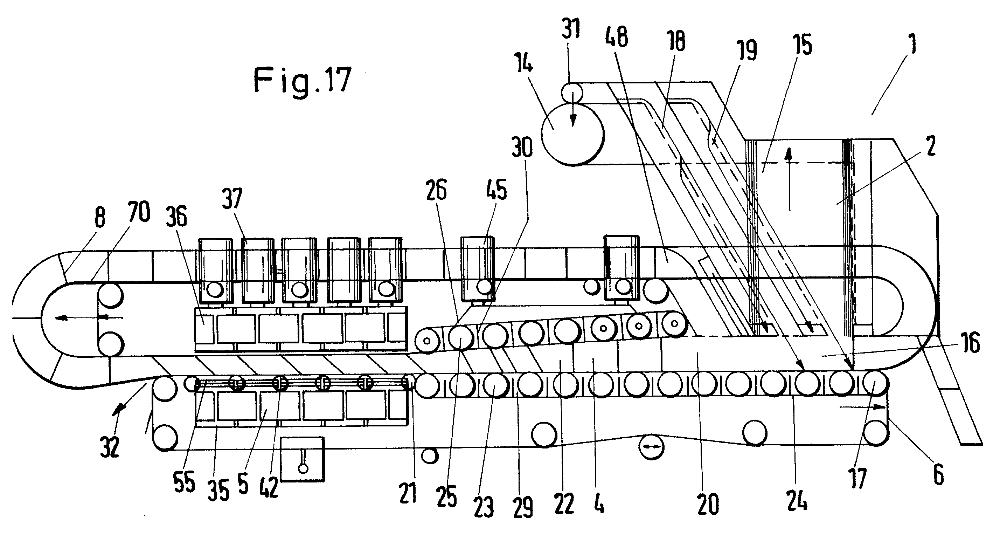

Figur 17 zeigt nochmals eine besonders einfach aufgebaute Ausführungsform der Vorrichtung 1 nach der Erfindung, bei welcher lediglich zusätzlich zu den Dichtungen 10, 11 ein Filterband 6 ohne Querschotten und ein Druckband 70 mit Querschotten 8 verwendet wurde. Bei dieser Ausführungsform ist die Hochdruckstufe 5 entsprechend der Ausführungsform gemäß Figur 8 mit der Platte 55 ausgestattet, welche die Filtratkanäle 56 aufweist. Es darf daher auf die Beschreibung der Ausführungsform gemäß Figur 9 verwiesen werden.

Sämtlichen unter Bezugnahme auf Figuren 5 bis 17 beschriebenen Ausführungsformen ist gemeinsam, daß die Schlammeinspeisung, der Durchlauf und die Entwässerung in der Vorentwässerungsstufe kontinuierlich erfolgen. Der Durchlauf und die Entwässerung in der Mitteldruckstufe und in der Hochdruckentwässerungstufe erfolgen hiergegen intermittierend. Dabei dient die großvolumige Vorentwässerungskammer 15 der Vorentwässerungsstufe als Puffer während der Entwässerungszeit in der Hochdruckentwässerungsstufe bei stillstehenden Filterbändern. Da während dieser Zeit die Filterbänder ohnehin stillstehen, wird diese Zeit bei den beschriebenen Ausführungsformen dazu genutzt, um in der Mitteldruckstufe ebenfalls zusätzlich den Druck zu steigern. Da sämtliche Druckelement die Druckplatten und Hydraulikzylinder der Mitteldruckstufe und der Hochdruckstufe ortsfest angeordnet sind, d.h. sich mit den Filterbändern nicht mitbewegen, bewegt sich das Filterband immer nur im Takt der einstellbaren Entwässerungszeit um die Länge der Hochdruckentwässerungsstufe vorwärts. Nach Entlastung der Hydraulikzylinder wird der in der Hochdruckentwässerungsstufe entwässerte Schlamm aus der Maschine ausgefahren und als Schlammkuchen abgeworfen, während sich gleichzeitig die Hochdruckentwässerungsstufe wieder mit dem Schlamm aus der Mitteldruckstufe füllt und diese wiederum gleichzeitig mit dem Schlamm aus der Vorentwässerungsstufe befüllt wird. Während des Stillstandes der Bänder steigt der Schlammspiegel in der Vorentwässerungskammer an und sinkt während des Befüllens beider Stufen wiederum ab.

Sämtliche aus der Beschreibung, den Ansprüchen und Zeichnungen hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

**Ansprüche**

1.  Vorrichtung zum Entwässern von Schlamm und ähnlichen Substanzen, insbesondere von Abfall- und Produktionsschlämmen, wobei der zu entwässernde Schlamm kontinuierlich der Vorrichtung zugeführt und anschließend in ein sich intermittierend vorbei an stationären Druckplatten (35,36,272,274) bewegendes, geschlossenes Schlammkamervolumen (270) eingespeist wird, mit einer Puffereinrichtung (15,104) zwischen der kontinuierlichen Schlammzuführung und der diskontinuierlichen, intermittierenden Schlammeinspeisung, **dadurch gekennzeichnet,** daß die Puffereinrichtung aus einem als Vorentwässerungsstufe (2, 100) ausgebildeten ortsfesten Behälter (15, 104) gebildet wird, dem der zu entwässernde Schlamm kontinuierlich zugeführt wird und bei dem ein Ende mit dem Schlammkammervolumen (270) in Verbindung steht.

2.  Vorrichtung nach Anspruch 1, dadurch gekennzeichnet, daß die Puffereinrichtung als Entwässerungskorb (104) ausgebildet ist, dessen unteres Ende mit dem Schlammkammervolumen (270) in Verbindung steht.

3.  Vorrichtung nach Anspruch 2, mit einem im Bereich der Schlammeinspeisung im wesentlichen waagrechten, eine Seite des Schlammkammervolumens begrenzenden Filterband, dadurch gekennzeichnet, daß der Filterkorb (104) direkt oberhalb des Filterbandes (214) angeordnet ist.

4.  Vorrichtung nach Anspruch 2 oder 3, gekennzeichnet durch
    einen Misch- und Reaktionsraum (102) mit einem Eingang (110) für Schlamm und Flokkungsmittel zum kontinuierlichen Zuführen von Schlamm und Flockungsmittel in den Misch- und Reaktionsraum (102), eine Vorrichtung (124) zum kontinuierlichen Zuführen von Schlamm aus dem Misch-und Reaktionsraum (102) in den Entwässerungskorb (104), den Entwässerungskorb (104) mit mindestens einem vorzugsweise zylindrischen Siebkorb (130) mit vertikaler Zylinderachse zum hydrostatischen Entwässern des Schlamms, wobei innerhalb des Entwässerungskorbs (104) das Filtrat den mindestens einen Siebkorb (130) in radialer Richtung durchströmt, sowie
    eine Vorrichtung (132, 134) zum Auffangen und Abführen des Filtrats.

5.  Vorrichtung nach Anspruch 4, dadurch gekennzeichnet, daß der Misch- und Reaktionsraum (102) als vertikal stehender, U-förmiger Rohrkörper (106) ausgebildet ist, daß der Eingang (110) für Schlamm und Flockungsmittel am oberen Endbereich des einen Schenkels (108) des Rohrkörpers (106) angeordnet ist, und daß der obere Endbereich des anderen Schenkels (120) des Rohrkörpers (106) mit der Vorrichtung (124) zum kontinuierlichen Zuführen von Schlamm in den Entwässerungskorb (104) in Verbindung steht.

6.  Vorrichtung nach Anspruch 5, dadurch gekennzeichnet, daß der obere Endbereich des anderen Schenkels (120) bezüglich des Entwässerungskorbes (104) in einer solchen Höhe angeordnet ist, daß der aus dem oberen Endbereich des anderen Schenkels (120) austretende Schlamm durch freien Überlauf zum oberen Ende des Entwässerungskorbs (104) gelangt.

7. Vorrichtung nach einem der Ansprüche 4 bis 6, dadurch gekennzeichnet, daß im Misch- und Reaktionsraum (102) vorzugsweise im Bereich des Eingangs (110) für Schlamm und Flokkungsmittel eine Mischeinrichtung (116) insbesondere in Form eines Wirbelrads angeordnet ist.

8. Vorrichtung nach einem der Ansprüche 4 bis 7, dadurch gekennzeichnet, daß zwei konzentrische Siebkörbe (130, 131) vorgesehen sind und der Schlamm dem zwischen den beiden Siebkörben (130, 131) vorhandenen Ringraum zugeleitet wird.

9. Vorrichtung nach einem der Ansprüche 4 bis 8, dadurch gekennzeichnet, daß der Entwässerungskorb (104) eine Vorrichtung (138) zum Reinigen der Öffnungen des mindestens einen Siebkorbs (130) umfaßt.

10. Vorrichtung nach Anspruch 9, dadurch gekennzeichnet, daß die Reinigungsvorrichtung (138) von einer rotierenden, eine Wandung des mindestens einen Siebkorbs (130) überstreichenden Abstreifvorrichtung gebildet wird.

11. Vorrichtung nach einem der vorhergehenden Ansprüche, dadurch gekennzeichnet, daß zwischen dem unteren Ende des Entwässerungskorb (104) und dem Schlammkammervolumen (270) eine Einrichtung (158) zum Steuern der Menge des in das Schlammkammervolumen (270) einzuspeisenden vorentwässerten Schlamms angeordnet ist.

12. Vorrichtung nach Anspruch 11, dadurch gekennzeichnet, daß die Einrichtung von einer steuerbaren bzw. regelbaren Klappe (158) oder einem steuerbaren bzw. regelbaren Schieber gebildet ist.

13. Vorrichtung nach einem der vorhergehenden Ansprüche, dadurch gekennzeichnet, daß das Schlammkammervolumen (270) zwischen Entwässerungskorb (104) und Schlammkuchen-Austragsstation (B) geradlinig verläuft.

14. Vorrichtung nach Anspruch 12, dadurch gekennzeichnet, daß das Schlammkammervolumen (270) zwischen einem unteren umlaufenden Filterband (6, 214) und einem oberen umlaufenden Band (7, 212) definiert ist.

15. Vorrichtung nach Anspruch 13, dadurch gekennzeichnet, daß das obere Band (7) ein Druckband (12,212) ist.

16. Vorrichtung nach Anspruch 14 oder 15, dadurch gekennzeichnet, daß die das Schlammkammervolumen (270) definierenden Bänder (6, 7, 214, 212) eine geradlinige Hochdruck-Entwässerungszone (5, 300) durchlaufen, die durch mindestens ein stationäres Druckplattenpaar (35, 36, 272, 274) definiert ist, welches horizontal angeordnete, gegenüberliegende Druckplatten aufweist, zwischen denen die das Schlammkammervolumen (270) definierenden Bänder (6, 7, 214, 212) verlaufen und die zum Erzeugen des Entwässerungsdrucks intermittierend aufeinander zu bewegbar sind.

17. Vorrichtung nach Anspruch 16, dadurch gekennzeichnet, daß eine Mehrzahl von nebeneinanderliegenden Druckplattenpaaren (35, 36, 272, 274) vorgesehen sind.

18. Vorrichtung nach Anspruch 16 oder 17, dadurch gekennzeichnet, daß die unteren Druckplatten (35, 272) starr am Gerätegestell (39, 276) gelagert sind und daß die oberen Druckplatten (36, 274) über hydraulische Hochdruckerzeuger (37, 38, 282) gegen die unteren Druckplatten (35, 272) zustellbar sind, oder umgekehrt.

19. Vorrichtung nach Anspruch 18, dadurch gekennzeichnet, daß die Druckplatten (35, 36, 272, 274) eines jeden Druckplattenpaares mittels Druckfedern (40, 41, 288) auseinander in eine geöffnete Position gedrückt werden, in der sich die das Schlammkammervolumen (270) definierenden Bänder (6, 7, 9, 9a, 212, 214,224) zwischen den Druckplatten (35, 36, 272, 274) vorwärts bewegen können.

20. Vorrichtung nach Anspruch 19, dadurch gekennzeichnet, daß längs der Hochdruck-Entwässerungszone (5, 300) sich gegenüberliegende Druckrollenpaare (42, 90, 292) zum Führen der das Schlammkammervolumen (270) definierenden Bänder angeordnet sind.

21. Vorrichtung nach Anspruch 19, dadurch gekennzeichnet, daß die Druckrollen (42, 290, 292) in Richtung zum Schlammkammervolumen (270) hin federvorgespannt sind.

22. Vorrichtung nach einem der Ansprüche 14 bis 21, dadurch gekennzeichnet, daß zum seitlichen Abdichten des Schlammkammerraums (270) im Bereich der Hochdruck-Entwässerungszone (5, 300) beidseitig je ein um vertikale Achsen umlaufender Dichtungsring (10, 11, 256, 258) vorgesehen ist.

23. Vorrichtung nach einem der Ansprüche 14 bis 22, dadurch gekennzeichnet, daß das Filterband (6, 7, 214) von einem Entwässerungsstrukturen wie Kanäle und Öffnungen aufweisenden Tragband (9, 9a, 224) getragen ist.

24. Vorrichtung nach einem der Ansprüche 16 bis 23, dadurch gekennzeichnet, daß zwischen Vorentwässerungsstufe (2, 100) und Hochdruck-Entwässerungszone (5, 300) eine keilförmige Entwässerungsstufe (3, 4, 200) vorgesehen ist, in der sich das Schlammkammervolumen in Schlammtransportrichtung (A) gesehen keilförmig verjüngt.

25. Vorrichtung nach Anspruch 24, dadurch gekennzeichnet, daß die das Schlammkammervolumen definierenden Bänder (6, 7, 212, 214) im Bereich der keilförmigen Entwässerungsstufe (3, 4, 200) mittels umlaufender Kettengliederbänder (228, 254) oder Rollenbatterien abgestützt sind.

26. Vorrichtung nach einem der Ansprüche 13 bis 25, gekennzeichnet durch folgenden Aufbau:
   - die untere, umlaufende Bandanordnung (202) verläuft zwischen endseitigen Umlenkrollen (216, 218) geradlinig und im wesentlichen horizontal,
   - überhalb des einen Endes der unteren Bandanordnung (202) ist der Entwässerungskorb (104) angeordnet,
   - der Raum (204) zwischen dem unteren Ende des Schlammraums des Entwässerungskorbes (104) und der unteren Bandanordnung (202) ist seitlich und zum einen Ende der Bandanordnung hin abgedichtet, in Transportrichtung (A) des Bandes jedoch offen.

27. Vorrichtung nach Anspruch 26 und Anspruch 12, dadurch gekennzeichnet, daß anschließend an den Entwässerungskorb (104) der Vorentwässerungsstufe (100) die Klappe (158) oder der Schieber angeordnet ist.

28. Vorrichtung nach Anspruch 27 und Anspruch 24, dadurch gekennzeichnet, daß die der Vorentwässerungsstufe (100) zugewandte Umlenkrolle (234) der oberen, umlaufenden Bandanordnung (212) anschließend an die Klappe (158) oder den Schieber angeordnet ist und daß die obere Bandanordnung (212) zur Bildung des keilförmigen Schlammkammervolumens (200) von dieser Umlenkrolle (234) schräg nach unten bis zu einer weiteren Umlenkrolle (236) am Ende des keilförmigen Schlammkammervolumens (200) verläuft.

29. Vorrichtung nach einem der vorhergehenden Ansprüche, dadurch gekennzeichnet, daß der zu entwässernde Schlamm die Vorentwässerungsstufe (2, 100) in senkrechter Richtung durchströmt und daß in den sich hieran anschließenden Druckstufen (3, 4, 5, 200, 300) das Schlammkammervolumen (270) waagrecht geführt ist.

30. Vorrichtung nach einem der vorstehenden Ansprüche, dadurch gekennzeichnet, daß die Puffereinrichtung als großvolumige Vorentwässerungskammer (15) ausgebildet ist, deren Boden (16) durch das Filterband (7) gebildet ist.

31. Vorrichtung nach Anspruch 30, dadurch gekennzeichnet, daß in der Vorentwässerungskammer (15) zusätzliche Filterflächen (18) vorgesehen sind.

32. Vorrichtung nach Anspruch 31, dadurch gekennzeichnet, daß die Filterflächen (18) als in der Vorentwässerungskammer (15) angeordnete Spaltsiebe (19) ausgebildet sind.

33. Vorrichtung nach einem der vorstehenden Ansprüche 30 bis 32, dadurch gekennzeichnet, daß in Förderrichtung an die Vorentwässerungskammer (15) anschließend eine keilförmige Mitteldruckstufe (3, 4) vorgesehen ist, in der auf den geförderten Schlamm ein oberes Druckband (7, 13) aufläuft.

34. Vorrichtung nach Anspruch 33, dadurch gekennzeichnet, daß das Druckband (70,13) als Mitnehmerband mit daran befestigten Querschotten (8) ausgebildet ist.

35. Vorrichtung nach einem der vorstehenden Ansprüche 30 bis 34, dadurch gekennzeichnet, daß dem Filterband (6, 7) mit umlaufend Querschotten (8) zugeordnet sind.

36. Vorrichtung nach Anspruch 34 oder 35, dadurch gekennzeichnet, daß die Querschotten (8) schwenkbar und/oder flexibel ausgebildet sind.

37. Vorrichtung nach Anspruch 35 oder 36, dadurch gekennzeichnet, daß die Querschotten (8) auf einem gesondert umlaufenden Querschottenband (61) befestigt sind.

38. Vorrichtung nach Anspruch 37, dadurch gekennzeichnet, daß das Querschottenband (61) durch zwei im Abstand zueinander umlaufende Gummistreifen (62, 63) gebildet ist.

39. Vorrichtung nach einem der vorstehenden Ansprüche, dadurch gekennzeichnet, daß das Querschottenband (61) gemeinsam mit den Dichtungen (10, 11) umläuft.

40. Vorrichtung nach einem der vorstehenden Ansprüche 30 bis 39, dadurch gekennzeichnet, daß zwei Mitteldruckstufen (3, 4) hintereinander geschaltet sind.

41. Vorrichtung nach einem der vorstehenden Ansprüche 30 bis 40, dadurch gekennzeichnet, daß in der Mitteldruckstufe (4) das Filterband (6) und das Druckband (7) auf einer Vielzahl von Druckwalzen (23) abgestützt sind.

42. Vorrichtung nach Anspruch 41, dadurch gekennzeichnet, daß der durch die Druckwalzen (23, 25) ausgeübte Drucke veränderbar ist.

43. Vorrichtung nach Anspruch 42, dadurch gekennzeichnet, daß die oberen und/oder die unteren Druckwalzen (23 und/oder 25) je einen gemeinsamen Lagerungsrahmen (24,26) aufweisen, daß der Lagerungsrahmen (24, 26) an einem Ende schwenkbar gelagert ist und daß Druckerzeuger (45) für die Schwenkbewegung des Lagerungsrahmens (24 und/oder 26) vorgesehen sind.

44. Vorrichtung nach einem der vorstehenden Ansprüche, dadurch gekennzeichnet, daß zwischen benachbarten Druckwalzen (23, 25) Tragleisten (29, 30) aus einem reibungsarmen Material vorgesehen sind.

45. Vorrichtung nach Anspruch 44, dadurch gekennzeichnet, daß die Tragleisten (29, 30) derart zu den Druckwalzen (23, 25) angeordnet sind, daß sie jeweils bezüglich einer oberen bzw. unteren Druckwalze (23, 25) gegenüberliegen.

46. Vorrichtung nach Anspruch 45, dadurch gekennzeichnet, daß die Tragleisten (29, 30) abgefedert sind.

47. Vorrichtung nach einem der Ansprüche 43 bis 46, dadurch gekennzeichnet, daß die Druckerzeuger (45) Hydraulikzylinder (45) sind.

48. Vorrichtung nach einem der vorstehenden Ansprüche 30 bis 47, dadurch gekennzeichnet, daß in der Hochdruckstufe (5) auf einer unteren stationären Druckplatte (35) eine nach oben offene Filtratkanäle (56) aufweisende Platte vorgesehen ist, auf welcher das Filterband (6) aufliegt.

49. Vorrichtung nach Anspruch 48, dadurch gekennzeichnet, daß Druckrollen (42) vorgesehen sind, welche über die Oberfläche der Platte (55) vorstehen.

50. Vorrichtung nach Anspruch 48 oder 49, dadurch gekennzeichnet, daß die Platte (55) aus einem reibungsarmen Kunststoff oder Gummi besteht.

51. Vorrichtung nach einem der Ansprüche 30 bis 47, dadurch gekennzeichnet, daß das Filterband (6 oder 7) auf einem mitlaufenden Tragband (9, 9a) abgestützt ist, welches nach oben offene, in einem Winkel zur Förderrichtung verlaufende Filtratkanäle aufweist.

52. Vorrichtung nach einem der Ansprüche 34 bis 51, dadurch gekennzeichnet, daß das Mitnehmerband (12) und/oder das Querschottenband (61) beim Einlauf in die Mitteldruckstufe (3, 4) eine Schleuse (48) durchläuft.

53. Vorrichtung nach Anspruch 52, dadurch gekennzeichnet, daß die Schleuse (48) durch einen dem Mitnehmerband (12) im Abstand gegenüberliegenden Wandungsabschnitt (49) gebildet ist, welcher mit den freien Oberkanten (50) der Querschotten (8) in Berührung steht.

54. Vorrichtung nach einem der vorstehenden Ansprüche 30 bis 53, dadurch gekennzeichnet, daß das Schlammkammervolumen zwischen einem unteren umlaufenden Filterband (6) und einem oberen umlaufenden Band (7, 12, 61, 70) definiert ist.

55. Vorrichtung nach Anspruch 54, dadurch gekennzeichnet, daß das obere Band ein Druckband (70, 12) ist.

**Claims**

1. Device for draining sludge and similar substances, in particular waste and industrial sludges, wherein the sludge to be drained is conveyed continuously to the device and adjoiningly fed into a closed sludge chamber volume (270) travelling intermittently past stationary pressure plates (35,36,272,274), with a buffer device (15,104) being provided between the continuous sludge conveyor and the discontinuously, intermittently moving sludge feed, characterised in that the buffer device consists of a stationary tank (15,104) which is adapted to function as a preliminary draining station (2,100) to which the wet or watery sludge is supplied continuously and of which one end communicates with the sludge chamber volume (270).

2. Device according to claim 1, characterised in that the buffer station comprises a drainage basket (104) the lower end of which communicates with the sludge chamber volume (270).

3. Device according to claim 2, comprising a substantially horizontal filter band in the region of the sludge feed which defines one side of the sludge chamber volume, characterised in that the drainage or filter basket (104) is arranged directly above the filter band (214).

4. Device according to claim 2 or 3, characterised by the provision of a mixing and reaction space (102) having an inlet (110) for sludge and flocculation medium for the continuous feeding of sludge and flocculation medium into the mixing and reaction space (102), a means (124) for continuously conveying sludge from the mixing and reaction space (102) into the filter basket (104), the filter basket (104) having at least one, preferably cylindrical wire screen basket (130) with a vertical cylinder axis for the hydrostatic dewatering of the sludge, the filtrate flowing in a radial direction through the, at least one, wire basket inside the filter basket (104), and a means (132,134) for collecting and evacuating the filtrate.

5. Device according to claim 4, characterised in that the mixing and reaction space (102) is a vertically upright, U-shaped tubular body (106), in that the inlet (110) for sludge and flocculation medium is arranged at the upper end zone of one leg (108) of the tubular body (106), and in that the upper end region of the other leg (120) of the tubular body (106) is in communication with the means (124) for continuously feeding sludge into the filter basket (104).

6. Device according to claim 5, characterised in that the upper end region of the other leg (120) is arranged at such height relative to the filter basket (104) that the sludge emerging from the top end of the other leg (120) arrives at the upper end of the filter basket (104) by virtue of free overspill.

7. Device according to any of claims 4 to 6, characterised by the provision inside the mixing and reaction space (102), preferably in the vicinity of the inlet (110) for sludge and flocculation medium, of a mixer means (116) in particular in the shape of a swivel wheel.

8. Device according to any of claims 4 to 7, characterised in that two concentric screen baskets (130,131) are provided and the sludge is directed into the annular space between said two screen baskets (130,131).

9. Device according to any of claims 4 to 8, characterised in that the filter basket (104) comprises means (138) for cleaning the holes of, or in the, at least one, screen basket (130).

10. Device according to claim 9, characterised in that the cleaning means (138) consist of a rotating stripper device sweeping a wall of the, at least one, screen basket (130).

11. Device according to any preceding claim, characterised by the provision between the bottom end of the filter basket (104) and the sludge chamber volume (270) of a means (158) for controlling the quantity of predrained sludge which is to be fed into the sludge chamber volume (270).

12. Device according to claim 11, characterised in that said means consist of a controllable or adjustable flap (158) or of a controllable or adjustable slide.

13. Device according to any preceding claim, characterised in that the sludge chamber volume (270) extends in a straight line between filter basket (104) and a sludge-cake discharge station (B).

14. Device according to claim 12, characterised in that the sludge chamber volume (270) is defined between a lower revolving filter band (6,214) and an upper revolving band (7,212).

15. Device according to claim 13, characterised in that the upper band (7) is a compression band (12,212).

16. Device according to claim 14 or 15, characterised in that the bands (6,7,214,212) which define the sludge chamber volume (270) pass through a straight-line high pressure dehydration zone (5,300) which is defined by at least one stationary pair of pressure plates (35,36,272,274) having horizontally mounted mutually opposite pressure plates between which extend the bands (6,7,214,212) which define the sludge chamber volume and which are adapted to be intermittently displaced towards each other to generate the dehydrating pressure.

17. Device according to claim 16, characterised in that a plurality of laterally adjacent pairs of pressure plates (35,36,272,274) are provided.

18. Device according to claim 16 or 17, characterised in that the lower pressure plates (35,272) are mounted rigidly on the apparatus frame (39,276) and that the upper pressure plates (36,274) are adapted to be advanced by means of hydraulic high pressure generators (37,38,282) to be advanced towards the lower pressure plates or vice versa.

19. Device according to claim 18, characterised in that the pressure plates (35,36,272,274) of each pair are urged apart into an open position by means of compression springs (40,41,288) in which position the bands (6,7,9,9a,212,214,224) which define the sludge chamber volume (270) can travel forwards between the pressure plates (35,36,272,274).

20. Device according to claim 19, characterised in that alongside the high pressure dehydration zone (5,300) opposing pressure roller pairs (42,290,292) are provided to guide the bands or belts which define the sludge chamber volume (270).

21. Device according to claim 19, characterised in that the pressure rollers (42,290,292) are spring-biased in the direction towards the sludge chamber volume (270).

22. Device according to any of claims 14 to 21, characterised in that, for laterally sealing off the sludge chamber volume (270) in the region of the high pressure dehydration zone (5,300), ring seals or gaskets (10,11,256,258) each revolving about a vertical axis are provided on both sides.

23. Device according to any of claims 14 to 22, characterised in that the filter band (6,7,214) is carried on a supporting belt (9,9a,224) which is provided with drainage formations such as channels and holes.

24. Device according to any of claims 16 to 23, characterised by the provision between the preliminary drainage stage (2,100) and the high pressure dehydration zone (5,300) of a conical dewatering stage (3,4,200) wherein the sludge chamber volume tapers down as viewed in the direction of sludge transport.

25. Device according to claim 24, characterised in that the bands (6,7,212,214) which define the sludge chamber volume are supported in the region of the conical dewatering stage (3,4,200) by means of revolving chainlink belts (228,254) or sets of rollers.

26. Device according to any of claims 13 to 25, characterised by the following construction:
    - the lower revolving band arrangement (202) extends substantially horizontally and in a straight line between direction reversing pulleys (216,218) at the ends,
    - the filter basket (104) is arranged above one end of the lower band system (202),
    - the space (204) between the lower end of the sludge-space in the filter basket (104) and the lower band system (202) is sealed laterally and relative to one end of the band system but remains open in the direction of transport (A) of the band.

27. Device according to claim 26 and claim 12, characterised in that the flap (158) or the slide is arranged adjoining the filter basket (104) of the preliminary draining station (100).

28. Device according to claim 27 and claim 12, characterised in that the reversing pulley (234) of the upper, revolving band system (212) which faces the preliminary draining station (100) is arranged adjacent to the flap (158) or the slide and in that the upper band arrangement (212), in order to form the tapering conical sludge chamber volume (200) extends obliquely downwards from this reversing pulley (234) to a further reversing pulley (236) mounted at the lower end of the conical sludge chamber volume (200).

29. Device according to any preceding claim, characterised in that the wet sludge flows through the preliminary draining station (2,100) in a vertical direction and that in the adjoining compression stages (3,4,5,200,300) the sludge chamber volume (270) is horizontally disposed.

30. Device according to any preceding claim, characterised in that the buffer device is conceived in the shape of a large-volume preliminary draining chamber (15) the bottom (16) of which is formed by the filter band (7).

**31.** Device according to claim 30, characterised in that additional filter surfaces (18) are provided in the pre-draining chamber (15).

**32.** Device according to claim 31, characterised in that the filter surfaces (18) take the shape of streamline split filters (19) arranged in the pre-draining chamber (15).

**33.** Device according to any preceding claim 30 to 32, characterised by the provision, adjoining the pre-drainage chamber (15) as viewed in the direction of transport, of a conical medium-pressure stage (3,4) wherein an upper pressure belt (7,13) is applied to the conveyed sludge.

**34.** Device according to claim 33, characterised in that the pressure belt (70,13) is a dog belt with transverse diaphragms (8) secured thereto.

**35.** Device according to any preceding claim 30 to 34, characterised in that transverse diaphragms (8) sharing the rotation thereof are associated with the filter band (6,7).

**36.** Device according to claim 34 or 35, characterised in that the transverse diaphragms (8) are adapted to be swiveled and/or are of flexible construction.

**37.** Device according to claim 35 or 36, characterised in that the transverse diaphragms (8) are mounted on a separately revolving transverse diaphragm support belt (61).

**38.** Device according to claim 37, characterised in that the transverse diaphragm-support belt (61) consists of a pair of relatively spaced revolving rubber bands (62,63).

**39.** Device according to any preceding claim, characterised in that the support belt (61) for the transverse diaphragms revolves jointly with the gaskets (10,11).

**40.** Device according to any of preceding claims 30 to 39, characterised in that two medium pressure stages (3,4) are arranged in succession.

**41.** Device according to any of preceding claims 30 to 40, characterised in that in the medium pressure stage (4) the filter band (6) and the pressure band (7) are supported on a multiplicity of pressure rollers (23).

**42.** Device according to claim 41, characterised in that the pressure applied by the rollers (23,25) is variable.

**43.** Device according to claim 42, characterised in that the upper and/or the lower pressure rollers (23 and/or 25) in each case have a common bearing frame (24,26), that the bearing frame (24,26) is pivotally mounted at one end and that pressure generators (45) are provided for the pivotal displacement of the bearing frame (24 and/or 26).

**44.** Device according to any preceding claim, characterised by the provision between adjacent pressure rollers (23,25) of supporting bars (29,30) made from a low friction material.

**45.** Device according to claim 44, characterised in that the supporting bars (29,30) are arranged relative to the pressure rollers (23,25) in such a manner as to be in each case opposite an upper or lower pressure roller (23,25).

**46.** Device according to claim 45, characterised in that the supporting bars (29,30) are spring-mounted.

**47.** Device according to any of claims 43 to 46, characterised in that the pressure generators (45) are hydraulic rams (45).

**48.** Device according to any of preceding claims 30 to 47, characterised in the provision, in the high pressure stage (5) on a lower, stationary pressure plate (35), of a plate comprising upwardly open filtrate channels (56) on which the filter band (6) is supported.

**49.** Device according to claim 48, characterised in that pressure rollers (42) are provided which project beyond the surface of the plate (55).

**50.** Device according to claim 48 or 49, characterised in that the plate (55) consists of a low friction plastics material or rubber.

**51.** Device according to any of claims 30 to 47, characterised in that the filter band (6 or 7) is supported on a co-revolving support belt (9,9a) which has upwardly open filtrate grooves or channels extending at an angle relative to the direction of conveying.

**52.** Device according to any of claims 34 to 51, characterised in that the dog belt (12) and/or the transverse diaphragm-support belt (61) passes through a lock (48) on entering the medium pressure stage (3,4).

53. Device according to claim 52, characterised in that the lock (48) is formed by a wall section (49) situated opposite the dog belt (12) in spaced relationship therewith and being in touch with the free top edges (50) of the transverse diaphragms (8).

54. Device according to any of preceding claims 30 to 53, characterised in that the sludge chamber volume is defined between a lower revolving filter band (6) and an upper revolving band (7,12,61,70).

55. Device according to claim 54, characterised in that the upper band is a pressure or compression band (70,12).

**Revendications**

1. Dispositif pour assécher de la boue et des substances analogues, en particulier des boues provenant de déchets et de la production, la boue à assécher étant amenée en continu au dispositif et ensuite injectée dans un volume de chambre à boue (270) fermé, se déplaçant de façon intermittente sur des plaques de pression stationnaires (35,36,272,274), avec un dispositif tampon (15,104) placé entre l'amenée continue de boue et l'injection intermittente de boue, de nature discontinue, caractérisé en ce que le dispositif tampon est formé d'un réservoir fixe (15,104) réalisé sous forme d'étage d'assèchement préliminaire (2,100), auquel est amené en continu la boue à assécher et dans lequel une extrémité est reliée au volume de chambre à boue (270).

2. Dispositif selon la revendication 1, caractérisé en ce que le dispositif tampon est réalisé sous la forme d'un panier d'assèchement (104), dont l'extrémité inférieure est reliée aux volumes de chambre à boue (270).

3. Dispositif selon la revendication 2, avec une bande filtre sensiblement horizontale dans la zone de l'injection de boue, délimitant une face du volume de chambre à boue, caractérisé en ce que le panier de filtre (104) est disposé directement au-dessus de la bande-filtre (214).

4. Dispositif selon la revendication 2 ou 3, caractérisé par

une enceinte de mélange et de réaction (102), avec une entrée (110) pour la boue et un agent floculant, en vue d'amener en continu la boue et l'agent floculant dans l'enceinte de mélange de de réaction (102), un dispositif (124) pour l'amenée continue de boue à partir de l'enceinte de mélange et de réaction (102) dans le panier d'assèchement (104), le panier d'assèchement (104) étant équipé d'au moins un panier de tamisage (130) de préférence cylindrique à axe de cylindre vertical, en vue d'assécher la boue par voie hydrostatique, le filtre s'écoulant en direction radiale à l'intérieur du panier d'assèchement (104), sur au moins un panier de tamisage (130), ainsi que

un dispositif (132,134) pour capter et évacuer le filtrat.

5. Dispositif selon la revendication 4, caractérisé en ce que l'enceinte de mélange et de réaction (102) est réalisée sous forme d'un corps tubulaire en U (106) placé verticalement, l'entrée (110) de la boue et de l'agent floculant étant disposée sur la zone d'extrémité supérieure d'une branche (108) du corps tubulaire (106), et la zone d'extrémité de l'autre branche (120) du corps tubulaire (106) étant reliée au dispositif (124) pour amener en continu la boue dans le panier d'assèchement (104).

6. Dispositif selon la revendication 5, caractérisé en ce que la zone d'extrémité supérieure de l'autre branche (120) est disposée par rapport au panier d'assèchement (104) à un niveau tel que la boue sortant de la zone d'extrémité supérieure de l'autre branche (120) arrive à l'extrémité supérieur du panier d'assèchement (104) par le trop plein libre.

7. Dispositif selon l'une des revendications 4 à 6, caractérisé en ce qu'un dispositif de mélange (116), en particulier sous forme d'une roue à tourbillons, est disposé dans l'enceinte de mélange et de réaction (102), avantageusement dans la zone de l'entrée (110) pour la boue et l'agent floculant.

8. Dispositif selon l'une des revendications 4 à 7, caractérisé en ce que deux paniers de tamisage (130,131) sont prévus et que la boue est amenée à l'espace annulaire existant entre les deux paniers de tamisage (130,131).

9. Dispositif selon l'une des revendications 4 à 8, caractérisé en ce que le panier d'assèchement (104) comprend un dispositif (138) pour nettoyer les ouvertures d'au moins un panier de tamisage (130).

10. Dispositif selon la revendication 9, caractérisé en ce que le dispositif de nettoyage (138) est formé par un dispositif de râclage rotatif, balayant une paroi du ou des paniers de tamisage (130).

11. Dispositif selon l'une des revendications précédentes, caractérisé en ce qu'un dispositif (158) pour commander la quantité de boue préasséchée à injecter dans le volume de chambre à boue (270) est disposé entre l'extrémité inférieure du panier d'assèchement (104) et le volume de chambre à boue (270).

12. Dispositif selon la revendication 11, caractérisé en ce que le dispositif est formé par un volet (158) susceptible d'être commandé ou réglé, ou d'un registre réglable.

13. Dispositif selon l'une des revendications précédentes, caractérisé en ce que le volume de chambre à boue (270) s'étend entre le panier d'assèchement (104) et le poste d'évacuation du gâteau de boue (B).

14. Dispositif selon la revendication 12, caractérisé en ce que le volume de chambre à boue (270) est défini entre une bande-filtre (6,214) tournant au-dessous et une bande filtre (7,212) tournant au-dessus.

15. Dispositif selon la revendication 13, caractérisé en ce que la bande supérieure (7) est une bande à pression (12,212).

16. Dispositif selon la revendication 14 ou 15, caractérisé en ce que les bandes (6,7,214,212) définissant le volume de chambre à boue (270) parcourent une zone d'assèchement à haute pression (5,303) rectiligne, qui est définie par au moins une paire de plaques de pression stationnaires (35,36,272,274), qui présente des plaques de pression confrontées, entre lesquelles s'étendent les bandes (6,7,214,212) définissant le volume de chambre à boue (270) et qui sont déplaçables les unes vers les autres de façon intermittente pour produire la pression d'assèchement.

17. Dispositif selon la revendication 16, caractérisé en ce que plusieurs paires de plaques de pression (35,36,272,274) sont prévues, les unes à côté des autres.

18. Dispositif selon la revendication 16 ou 17, caractérisé en ce que les plaques de pression inférieures (35,272) sont montées rigidement sur le bâti de l'appareil (39,276) et que les plaques de pression supérieures (36,274) sont applicables contre les plaques de pression inférieures (35,272) par l'intermédiaire de générateur hydraulique de haute pression (37,38,282), ou inversement.

19. Dispositif selon la revendication 18, caractérisé en ce que les plaques de pression (35,36,272,274) de chacune des paires de plaques de pression sont pressées loin l'une de l'autre au moyen de ressorts de pression (40,41,288) en position ouverte, dans laquelle les bandes (6,7,9,9a,212,214,224) définissant le volume de chambre à boue (270) peuvent progresser en avant entre les plaques de pression (35,36,272,274).

20. Dispositif selon la revendication 19, caractérisé en ce que des paires de galets de pression (42,290,292) confrontés sont disposés le long de la zone d'assèchement à haute pression (5,300), en vue de guider les bandes définissant le volume de chambre à boue (270).

21. Dispositif selon la revendication 19, caractérisé en ce que les galets de pression (42,290,292) sont précontraints par des ressort en direction du volume de la chambre à boue (270).

22. Dispositif selon l'une des revendications 14 à 21, caractérisé en ce qu'une bague d'étanchéité (10,11,256,258) tournant autour d'axes verticaux est prévue chaque fois des deux côtés dans la zone d'assèchement à haute pression (5,300), en vue de produire une isolation étanche de l'enceinte de chambre à boue (270).

23. Dispositif selon l'une des revendications 14 à 22, caractérisé en ce que la bande-filtre (6,7,214) est portée par une bande support (9,9a,224) présentant des structures d'assèchement, telles que des canaux et des orifices.

24. Dispositif selon l'une des revendications 16 à 23, caractérisé en ce qu'un étage d'assèchement en forme de coin (3,4,200) est prévu, entre l'étage de préassèchement (2,100) et la zone d'assèchement (5,300) à haute pression, dans lequel le volume de chambre boue s'effile en forme de coin lorsqu'on observe dans le sens de transport (A) des boues.

25. Dispositif selon la revendication 24, caractérisé en ce que les bandes (6,7,212,214) définissant le volume de chambre à boue sont soutenues dans la zone de l'étage d'assèchement en forme de coin (3,4,200) au moyen de bandes à organes à chaîne (228,254) ou de batteries de rouleaux.

26. Dispositif selon l'une des revendications 13 à 25, caractérisé par la structure suivante :
    - la disposition circulaire inférieure de bande (202) s'étend entre des valets de renvoi d'extrémité (216,218), de façon rectiligne et sensiblement horizontale,
    - le panier d'assèchement (104) est disposé au-dessus d'une extrémité de la disposition inférieure de bande (202),
    - l'espace (204) situé entre l'extrémité inférieure de l'enceinte à boue du panier d'assèchement (104) et la disposition de bande inférieure (202) est pourvu latéralement et à une extrémité de la disposition de bande d'une étanchéité, tout en étant ouvert dans le sens de transport (A) de la bande.

27. Dispositif selon la revendication 26 et la revendication 12, caractérisé en ce que le volet (158) ou le registre est disposé immédiatement sur la panier d'assèchement (104) de l'étage de préassèchement (100).

28. Dispositif selon la revendication 27 et 24, caractérisé en ce que le galet de renvoi (234) tourné vers l'étage de préassèchement (10) de la disposition supérieure circulaire de bande (212) est disposé immédiatement sur le volet (158) ou le registre, et que la disposition à bande supérieure (212) s'étend en descendant en biais, vers un autre galet de renvoi (236) situé à l'extrémité du volume de chambre à boue (200), en vue de former le volume de chambre à boue en forme de coin (200).

29. Dispositif selon l'une des revendications précédentes, caractérisé en ce que la boue à assécher parcourt en direction verticale l'étage de préassèchement (2,100) et que le volume de chambre à boue (270) est guidé horizontalement dans les étages de pression adjacents (3,4,5,200,300).

30. Dispositif selon l'une des revendications précédentes, caractérisé en ce que le dispositif tampon est réalisé sous la forme d'une chambre de préassèchement (15) à grand volume, dont le fond (16) est formé par la bande-filtre (7).

31. Dispositif selon la revendication 30, caractérisé en ce que des surfaces de filtration supplémentaires (18) sont prévues dans la chambre de préassèchement (15).

32. Dispositif selon la revendication 31, caractérisé en ce que les surfaces de filtration (18) sont réalisées sous la forme de tamis à interstices (19) disposés dans la chambre de préassèchement (15).

33. Dispositif selon l'une des revendications précédentes, caractérisé en ce qu'un étage moyenne pression (3,4) en forme de coin, dans lequel une bande de pression supérieure (7,13) passe sur la boue véhiculée, est prévu adjacent dans le sens de transport à la chambre de préassèchement (15).

34. Dispositif selon la revendication 33, caractérisé en ce que la bande de pression (70,13) est réalisée sous forme de bande d'entraînement, avec des cloisons transversales fixées dessus.

35. Dispositif selon l'une des revendications précédentes 30 à 34, caractérisé en ce que des cloisons circulaires (8) sont associées à la bande-filtre (6,7).

36. Dispositif selon la revendication 34 ou 35, caractérisé en ce que les cloisons transversales (8) sont réalisées pivotantes et/ou flexibles.

37. Dispositif selon la revendication 35 ou 36, caractérisé en ce que les cloisons transversales (8) sont fixées sur une bande à cloison transversale (61) circulaire séparée.

38. Dispositif selon la revendication 37, caractérisé en ce que la bande à cloison transversale (61) est formée par deux bandes de caoutchouc circulaires (62,63) espacées l'une de l'autre.

39. Dispositif selon l'une des revendications précédentes, caractérisé en ce que la bande à cloison transversale (61) défile ensemble avec les étanchéités (10,11).

40. Dispositif selon l'une des revendications précédentes 30 à 39, caractérisé en ce que deux étages moyenne pression (3,4) sont mis en circuit l'un derrière l'autre.

41. Dispositif selon l'une des revendications précédentes 30 à 40, caractérisé en ce que, dans l'étage moyenne pression (4), la bande-filtre (6) et la bande de pression (7) prennent appui sur une pluralité de rouleaux de pression (23).

42. Dispositif selon la revendication 41, caractérisé en ce que la pression exercée par les rouleaux de pression (23,25) est modifiable.

43. Dispositif selon la revendication 42, caractérisé en ce que les rouleaux de pression supérieurs et/ou inférieurs (23 et/ou 25) présentent chacun un cadre de support (24,26) commun, que le cadre de support (24,26) est monté pivotant à une extrémité et que des générateurs de pression (45) sont prévus pour le mouvement de pivotement du cadre de support (24 et/ou 26).

44. Dispositif selon l'une des revendications précédentes, caractérisé en ce que des bandes support (29,30) en, un matériau à faible coefficient de frottement sont prévues entre des rouleaux de pression (23,25) voisins.

45. Dispositif selon la revendication 44, caractérisé en ce que les bandes de support (29,30) sont disposées par rapport aux rouleaux de pression (23,25) de façon telle qu'elles se trouvent chaque fois en face d'un rouleau de pression supérieur ou inférieur (23,25).

46. Dispositif selon la revendication 46, caractérisé en ce que les bandes de support (29,30) sont montées sur ressort.

47. Dispositif selon l'une des revendications 43 à 46, caractérisé en ce que les générateurs de pression (45) sont des vérins hydrauliques (45).

48. Dispositif selon l'une des revendications précédentes 30 à 47, caractérisé en ce qu'une plaque présentant des canaux de filtrat (56) ouverts vers le haut, sur laquelle appuie la bande-filtre (6), est prévue dans l'étage haute pression (5), sur une plaque de pression stationnaire inférieure (35).

49. Dispositif selon la revendication 48, caractérisé en ce que des galets de pression qui font saillie au-dessus de la surface de la plaque (55) sont prévus.

50. Dispositif selon la revendication 48 ou 49, caractérisé en ce que la plaque (55) se compose d'une matière plastique à faible coefficient de frottement ou de caoutchouc.

51. Dispositif selon l'une des revendications 30 à 47, caractérisé en ce que la bande-filtre (6 ou 7) prend appui sur une bande de support (9,9a) tournant conjointement, qui présente des canaux de filtrat ouverts vers le haut, s'étendant en faisant un angle par rapport à la direction de déplacement.

52. Dispositif selon l'une des revendications 34 à 51, caractérisé en ce que la bande d'entraînement (12) et/ou la bande à cloisons transversales (61) traverse un sas (48) lors de l'entrée dans l'étage moyenne pression (3,4).

53. Dispositif selon la revendication 52, caractérisé en ce que le sas (48) est formé par une section de paroi (49), opposée à distance à la bande d'entraînement (12), qui est en contact avec les bordures supérieures libres (50) des cloisons transversales (8).

54. Dispositif selon l'une des revendications précédentes 30 à 53, caractérisé en ce que le volume de chambre à boue est défini entre une bande-filtre (6) circulaire inférieure et une bande circulaire supérieure (7,12,61,70).

55. Dispositif selon la revendication 54, caractérisé en ce que la bande supérieure est une bande de pression (70,12).

# Fig.1

EP 0 264 899 B1

# Fig.2

264 282 286 286 286 286 282 258 266

206 130 131

110

208

260 282 286 286 282 256 262

25

EP 0 264 899 B1

B

EP 0 264 899 B1

# Fig. 3

26

Fig.4

# Fig.5

EP 0 264 899 B1

# Fig.6

Fig.7

Fig.8

# Fig.9

Fig.10

Fig.11

# F i g .12

# Fig.13

# Fig.14

EP 0 264 899 B1

Fig.15

# Fig.16

Fig.17

EP 0 264 899 B1